# EUROPEAN PATENT APPLICATION

(11) **EP 4 513 481 A1**
(43) Date of publication of application: **26.02.2025**
(21) Application number: 23830462.0
(22) Date of filing: 29.06.2023
(51) Int. Cl.: G10L 15/22

(54) **VOICE INSTRUCTION PROCESSING METHOD, APPARATUS AND SYSTEM, AND STORAGE MEDIUM**

(30) Priority: 01.07.2022 CN 202210775676
(71) Applicant: Huawei Technologies Co., Ltd., Shenzhen, Guangdong 518129 (CN)
(72) Inventor: ZHANG, Yabing, Shenzhen, Guangdong 518129 (CN); HAN, Xiaofeng, Shenzhen, Guangdong 518129 (CN); ZHANG, Tian, Shenzhen, Guangdong 518129 (CN); CHEN, Kaiji, Shenzhen, Guangdong 518129 (CN); XU, Kun, Shenzhen, Guangdong 518129 (CN)
(74) Representative: Körber, Martin Hans
(86) International application number: PCT/CN2023/104190
(87) International publication number: WO 2024/002298

(57) **Abstract**

A speech instruction processing method is provided. The method includes: A voice assistant obtains a first speech instruction; determines an intent of the first speech instruction, and determines, based on the intent of the first speech instruction, that the first speech instruction misses a slot; obtains a second speech instruction in a historical speech instruction set, where the second speech instruction is related to the first speech instruction; and determines the slot of the first speech instruction based on a slot of the second speech instruction. According to the method, complete semantic meaning of a speech instruction can be determined when the semantic meaning of the speech instruction is missing, so that the speech instruction can be executed. A speech instruction processing system, an electronic device, and a computer-readable storage medium are further provided.

## Description

This application claims priority to Chinese Patent Application No. 202210775676.2, filed with the China National Intellectual Property Administration on July 1, 2022 and entitled "SPEECH INSTRUCTION PROCESSING METHOD, APPARATUS, AND SYSTEM, AND STORAGE MEDIUM", which is incorporated herein by reference in its entirety.

### TECHNICAL FIELD

This application relates to the field of speech control technologies, and in particular, to a speech instruction processing method, apparatus, and system, and a storage medium.

### BACKGROUND

With rapid development of information technologies, speech control is increasingly widely used as a form of human-computer interaction.

Currently, speech control is usually implemented by using a voice assistant. A user may input a speech instruction by using the voice assistant, and then the voice assistant controls, based on the speech instruction input by the user, an electronic device to perform an operation corresponding to the speech instruction. Especially in the smart home field, the voice assistant may be used as a smart home control interface, and automatically control a smart device directly through speech conversations, to facilitate use of various devices by the user.

The current voice assistant lacks a multi-turn continuation capability for processing speech instructions, and requires that a speech instruction input by the user each time provide complete information, for example, include an intent and a slot. If semantic meaning of the speech instruction input by the user is incomplete, for example, misses an execution device, the voice assistant cannot understand the speech instruction, and the speech instruction cannot be executed.

### SUMMARY

Embodiments of this application provide a speech instruction processing method, apparatus, and system, and a storage medium, to determine complete semantic meaning of a speech instruction when the semantic meaning of the speech instruction is missing, so that the speech instruction can be executed.

According to a first aspect, a speech instruction processing method is provided, and the method may be executed by a voice assistant. The method includes: obtaining a first speech instruction; determining an intent of the first speech instruction, and determining, based on the intent of the first speech instruction, that the first speech instruction misses a slot; obtaining a second speech instruction in a historical speech instruction set, where the second speech instruction is related to the first speech instruction; and determining the slot of the first speech instruction based on a slot of the second speech instruction.

In the foregoing implementation, when the first speech instruction misses a slot (for example, an intent executor, or more specifically, an execution device, an application, or a service), the slot of the first speech instruction may be filled by using the slot of the second speech instruction that is in the historical speech instruction set and that is related to the first speech instruction, to obtain the speech instruction with complete semantic meaning, so that the speech instruction can be executed.

In a possible implementation, the determining the slot of the first speech instruction based on a slot of the second speech instruction includes: The missing slot of the first speech instruction is provided by the corresponding slot of the second speech instruction.

In a possible implementation, after the determining the slot of the first speech instruction based on a slot of the second speech instruction, the method further includes: adding the slot of the second speech instruction to the first speech instruction; and storing, in the historical speech instruction set, the first speech instruction to which the slot is added.

In the foregoing implementation, the completed first speech instruction is stored in the historical speech instruction set, to be provided as a basis for a subsequent speech processing operation. Optionally, after the first speech instruction is successfully executed, the first speech instruction may be stored into the historical speech instruction set.

Optionally, the adding the slot of the second speech instruction to the first speech instruction includes: obtaining the slot in structured data of the second speech instruction, where the slot in the structured data of the second speech instruction is slot information expressed in a natural language or is a protocol parameter, and the protocol parameter is a protocol parameter obtained by mapping the slot information expressed in the natural language; and adding the slot in the structured data of the second speech instruction to structured data of the first speech instruction.

Optionally, the method further includes: if the first speech instruction includes a demonstrative pronoun indicating the slot of the first speech instruction, deleting the demonstrative pronoun from the first speech instruction.

After the first speech instruction is completed, the demonstrative pronoun used to indicate the slot is deleted from the first speech instruction, so that the semantic meaning of the speech instruction can be clearer.

In a possible implementation, the obtaining a second speech instruction in a historical speech instruction set includes: obtaining, based on a correlation degree between the first speech instruction and a historical speech instruction in the historical speech instruction set, the second speech instruction that is in the historical speech instruction set and that is related to the first speech instruction.

Optionally, the obtaining, based on a correlation degree between the first speech instruction and a historical speech instruction in the historical speech instruction set, the second speech instruction that is in the historical speech instruction set and that is related to the first speech instruction includes: determining a correlation degree between the first speech instruction and each historical speech instruction in the historical speech instruction set based on the first speech instruction, the intent of the first speech instruction, and/or associated information corresponding to the first speech instruction, and each historical speech instruction in the historical speech instruction set, an intent of each historical speech instruction, and/or corresponding associated information, where the associated information corresponding to the first speech instruction is collected when the first speech instruction is received, and the associated information corresponding to the historical speech instruction is collected when the historical speech instruction is received; and selecting, from the historical speech instruction set based on the correlation degree between the first speech instruction and each historical speech instruction in the historical speech instruction set, the second speech instruction related to the first speech instruction.

In the foregoing implementation, a speech instruction matching operation is performed based on the associated information corresponding to the speech instruction, so that a matching result (the matched second speech instruction) can be more accurate.

In a possible implementation, the obtaining a second speech instruction in a historical speech instruction set includes: A first electronic device sends a first request message to a cloud or a third electronic device, where the first request message is used to request to obtain a speech instruction that is in the historical speech instruction set and that is associated with the first speech instruction, and the first electronic device is a receiving device of the first speech instruction; and the first electronic device receives a first response message sent by the cloud or the third electronic device, where the first response message carries the second speech instruction, and the second speech instruction is obtained from the historical speech instruction set based on a correlation degree between the first speech instruction and a historical speech instruction in the historical speech instruction set.

Optionally, the first request message carries the first speech instruction, the intent of the first speech instruction, and/or associated information corresponding to the first speech instruction.

Optionally, the associated information corresponding to the first speech instruction includes at least one of the following:
device information, where the device information is information about the receiving device of the first speech instruction;
user account information, where the user account information is user account information for logging in to a voice assistant;
location information, where the location information is location information of the receiving device of the first speech instruction;
time information, where the time information includes time at which the first speech instruction is received, and/or a time interval between the time at which the first speech instruction is received and time at which a previous speech instruction is received; and
user identity information, where the user identity information is associated with feature information of audio data of the first speech instruction.

In the foregoing implementation, the associated information corresponding to the speech instruction may include information in a plurality of different dimensions. This can improve matching accuracy.

In a possible implementation, the obtaining a second speech instruction in a historical speech instruction set, and the determining the slot of the first speech instruction based on a slot of the second speech instruction include: A cloud obtains, based on a correlation degree between the first speech instruction and a historical speech instruction in the historical speech instruction set, the second speech instruction that is in the historical speech instruction set and that is related to the first speech instruction; and determines the slot of the first speech instruction based on the slot of the second speech instruction, where the missing slot of the first speech instruction is provided by the corresponding slot of the second speech instruction.

In a possible implementation, the obtaining a first speech instruction includes: A cloud converts audio data of the first speech instruction from a first electronic device, to obtain corresponding text data; the determining an intent of the first speech instruction, and determining, based on the intent of the first speech instruction, that the first speech instruction misses a slot includes: The cloud parses the text data, to obtain the intent of the first speech instruction, and determines, based on the intent of the first speech instruction, that the first speech instruction misses the slot; and the obtaining a second speech instruction in a historical speech instruction set, and the determining the slot of the first speech instruction based on a slot of the second speech instruction include: The cloud obtains the second speech instruction in the historical speech instruction set, and determines the slot of the first speech instruction based on the slot of the second speech instruction.

In a possible implementation, the historical speech instruction set includes structured data of the historical speech instruction, and the structured data of the historical speech instruction includes an intent and a slot.

In a possible implementation, the slot is a device, an application, or a service that executes an intent of a speech instruction.

According to a second aspect, a speech instruction processing system is provided, including:
an automatic speech recognition module, configured to convert audio data of a first speech instruction into text data;
a natural language understanding module, configured to parse the text data of the first speech instruction, to obtain an intent of the first speech instruction; and
a processing module, configured to: if it is determined, based on the intent of the first speech instruction, that the first speech instruction misses a slot, obtain a second speech instruction in a historical speech instruction set, and determine the slot of the first speech instruction based on a slot of the second speech instruction, where the second speech instruction is related to the first speech instruction.

In a possible implementation, the missing slot of the first speech instruction is provided by the corresponding slot of the second speech instruction.

In a possible implementation, the processing module is further configured to: after the slot of the first speech instruction is determined based on the slot of the second speech instruction, add the slot of the second speech instruction to the first speech instruction, and store, in the historical speech instruction set, the first speech instruction to which the slot is added.

Optionally, the processing module is specifically configured to: obtain the slot in structured data of the second speech instruction, where the slot in the structured data of the second speech instruction is slot information expressed in a natural language or is a protocol parameter, and the protocol parameter is a protocol parameter obtained by mapping the slot information expressed in the natural language; and add the slot in the structured data of the second speech instruction to structured data of the first speech instruction.

Optionally, the processing module is further configured to: if the first speech instruction includes a demonstrative pronoun indicating the slot of the first speech instruction, delete the demonstrative pronoun from the first speech instruction.

In a possible implementation, the processing module is specifically configured to: obtain, based on a correlation degree between the first speech instruction and a historical speech instruction in the historical speech instruction set, the second speech instruction that is in the historical speech instruction set and that is related to the first speech instruction.

Optionally, the processing module is specifically configured to: determine a correlation degree between the first speech instruction and each historical speech instruction in the historical speech instruction set based on the first speech instruction, the intent of the first speech instruction, and/or associated information corresponding to the first speech instruction, and each historical speech instruction in the historical speech instruction set, an intent of each historical speech instruction, and/or corresponding associated information, where the associated information corresponding to the first speech instruction is collected when the first speech instruction is received, and the associated information corresponding to the historical speech instruction is collected when the historical speech instruction is received; and select, from the historical speech instruction set based on the correlation degree between the first speech instruction and each historical speech instruction in the historical speech instruction set, the second speech instruction related to the first speech instruction.

Optionally, the associated information corresponding to the first speech instruction includes at least one of the following:
device information, where the device information is information about a receiving device of the first speech instruction;
user account information, where the user account information is user account information for logging in to a voice assistant;
location information, where the location information is location information of the receiving device of the first speech instruction;
time information, where the time information includes time at which the first speech instruction is received, and/or a time interval between the time at which the first speech instruction is received and time at which a previous speech instruction is received; and
user identity information, where the user identity information is associated with feature information of audio data of the first speech instruction.

In a possible implementation, the historical speech instruction set includes structured data of the historical speech instruction, and the structured data of the historical speech instruction includes an intent and a slot.

In a possible implementation, the slot is a device, an application, or a service that executes an intent of a speech instruction.

In a possible implementation, the automatic speech recognition module, the natural language understanding module, and the processing module are located on a first electronic device; or the automatic speech recognition module and the natural language understanding module are located on a first electronic device, and the processing module is located on a cloud or a third electronic device; or the automatic speech recognition module is located on a first electronic device, and the natural language understanding module and the processing module are located on a cloud; or the automatic speech recognition module, the natural language understanding module, and the processing module are located on a cloud.

In a possible implementation, if the automatic speech recognition module and the natural language understanding module are located on the first electronic device, and the processing module is located on the cloud, the first electronic device exchanges information with the cloud, for example, the first electronic device may send a request message to the cloud, to request the processing module on the cloud to perform a corresponding processing operation; and after completing the corresponding processing operation, the processing module on the cloud may return a response message to the first electronic device. Optionally, the request message may carry the structured data (including the intent) of the first speech instruction and/or the associated information corresponding to the first speech instruction, and the response message may carry the second speech instruction or the slot of the second speech instruction.

In a possible implementation, if the automatic speech recognition module is located on the first electronic device, and the natural language understanding module and the processing module are located on the cloud, the first electronic device exchanges information with the cloud, for example, the first electronic device may send a request message to the cloud, to request the processing module on the cloud to perform a corresponding processing operation; and after completing the corresponding processing operation, the processing module on the cloud may return a response message to the first electronic device. Optionally, the request message may carry the text data of the first speech instruction and/or the associated information corresponding to the first speech instruction, and the response message may carry the second speech instruction or the slot of the second speech instruction.

In a possible implementation, the system further includes an execution module, configured to: based on the intent and the slot of the first speech instruction, execute the first speech instruction or indicate an execution device of the first speech instruction to execute the first speech instruction, where the execution device is provided by the slot of the first speech instruction.

In a possible implementation, the system further includes a natural language generation module and a text-to-speech module;
the execution module is further configured to obtain an execution result of the first speech instruction;
the natural language generation module is configured to convert the execution result of the first speech instruction into text data, where the text data is a natural language in a text format; and
the text-to-speech module is configured to convert the text data into audio data.

According to a third aspect, an electronic device is provided, including one or more processors, where one or more memories store one or more computer programs, the one or more computer programs include instructions, and when the instructions are executed by the one or more processors, the electronic device is enabled to perform the method according to any one of the first aspect.

According to a fourth aspect, a computer-readable storage medium is provided, including a computer program, where when the computer program is run on an electronic device, the electronic device is enabled to perform the method according to any one of the first aspect.

According to a fifth aspect, a computer program product is provided, and when the computer program product runs on an electronic device, the electronic device is enabled to perform the method according to any one of the first aspect.

According to a sixth aspect, a chip system is provided, including: a memory, configured to store a computer program; and a processor, where after the processor invokes the computer program from the memory and runs the computer program, an electronic device on which the chip system is installed is enabled to perform the method according to any one of the first aspect.

For beneficial effects of the second aspect to the sixth aspect refer to beneficial effects of the first aspect. Details are not described again.

### BRIEF DESCRIPTION OF DRAWINGS

FIG. 1 is a diagram of a system architecture in Scenario 1 according to an embodiment of this application;
FIG. 2 is a diagram of a system architecture in Scenario 2 according to an embodiment of this application;
FIG. 3 is a diagram of a system architecture in Scenario 3 according to an embodiment of this application;
FIG. 4 is a diagram of a system architecture in Scenario 4 according to an embodiment of this application;
FIG. 5 is a diagram of a system architecture in Scenario 5 according to an embodiment of this application;
FIG. 6 is a diagram of a structure of hardware inside an electronic device according to an embodiment of this application;
FIG. 7 is a diagram of a software structure of an electronic device according to an embodiment of this application;
FIG. 8a, FIG. 8b, and FIG. 8c each are a diagram of deployment of functional modules of a voice assistant according to an embodiment of this application;
FIG. 9 is a diagram of execution logic of a speech instruction processing method according to an embodiment of this application;
FIG. 10A to FIG. 10C are a schematic flowchart of a speech instruction processing method according to an embodiment of this application;
FIG. 11 is a diagram of clarifying an execution device through multi-turn conversations according to an embodiment of this application;
FIG. 12A to FIG. 12C are a schematic flowchart of a speech instruction processing method according to an embodiment of this application;
FIG. 13A to FIG. 13C are a schematic flowchart of another speech instruction processing method according to an embodiment of this application;
FIG. 14a and FIG. 14b each are a diagram of a speech instruction processing scenario in Example 1 according to an embodiment of this application; and
FIG. 15a and FIG. 15b each are a diagram of a speech instruction processing scenario in Example 2 according to an embodiment of this application.

### DESCRIPTION OF EMBODIMENTS

The following clearly and completely describes technical solutions in embodiments of this application with reference to the accompanying drawings in embodiments of this application. Terms used in the following embodiments are merely intended to describe specific embodiments, but are not intended to limit this application. The terms "one", "a", "the", "the foregoing", "this", and "the one" of singular forms used in this specification and the appended claims of this application are also intended to include an expression like "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

"A plurality of in embodiments of this application indicates two or more. It should be noted that in descriptions of embodiments of this application, terms such as "first" and "second" are merely used for distinguishing and description, but should not be understood as indicating or implying relative importance, or should not be understood as indicating or implying a sequence.

A current voice assistant lacks a multi-turn continuation capability for processing speech instructions, and requires that a speech instruction input by a user each time provide complete information, for example, include an intent and a slot (for example, a device used to execute the intent, or an application or a service used to execute the intent). If semantic meaning of the speech instruction input by the user is incomplete, for example, misses a slot, the voice assistant cannot understand the speech instruction, and the speech instruction cannot be executed.

Based on this, embodiments of this application provide a speech instruction processing method, apparatus, and system, and a storage medium, so that when semantic meaning of a speech instruction is missing, a voice assistant may determine a missing part (for example, execution device information) of the current speech instruction based on a historical speech instruction. In this way, the semantic meaning of the speech instruction can be complete, and the speech instruction can be executed.

The following first describes technical terms in embodiments of this application.

### (1) Voice assistant

The "voice assistant" in embodiments of this application is a speech application used to help, through intelligent interaction such as an intelligent conversation and instant questioning and answering, a user resolve various problems. For example, the voice assistant may help the user resolve a life problem. The voice assistant usually has an automatic speech recognition (automatic speech recognition, ASR) function, a natural language understanding (natural language understanding, NLU) module, and the like. The ASR function is used to convert audio data into text data, and the NLU function is used to parse out, from the text data, information such as an intent and a slot included in a speech instruction.

In a possible implementation, all functions of the voice assistant may be implemented on one electronic device. In another possible implementation, a function of the voice assistant may be implemented on a cloud, and a receiving function of the audio data of the speech instruction may be implemented on an electronic device. In another possible implementation, some functions of the voice assistant are implemented on an electronic device, and other functions are implemented on a cloud. In another possible implementation, some functions of the voice assistant are implemented on a first electronic device, and other functions are implemented on a third electronic device. For example, a receiving function of the audio data of the speech instruction is implemented on the first electronic device, and other functions of the voice assistant are implemented on the third electronic device.

It should be noted that the voice assistant is also referred to as a speech application or a speech application program. A naming manner of the voice assistant is not limited in embodiments of this application.

### (2) Speech instruction, and intent and slot in the speech instruction

The intent means recognizing an actual or a potential requirement of a user. Essentially, intent recognition is a classifier that allocates a user requirement into a specific type; or intent recognition is a sorter that sorts a set of potential requirements of the user by possibility.

The slot is a parameter carried by the intent. An intent may correspond to several slots. For example, the slot may include execution device information (for example, a type of an execution device, specifically, an "air conditioner") of the speech instruction, a location (for example, a room in which the execution device is located) at which the execution device is located, an application or a service that executes the intent of the user, and the like. For example, when a temperature on the air conditioner is controlled, the speech instruction needs to clearly specify that the execution device is the air conditioner and specify a location of the air conditioner (if there are a plurality of air conditioners nearby). The foregoing parameters are slots of the intent "Control the temperature on the air conditioner".

The execution device information in slot parameters is used as an example. The execution device information may include the following two data forms:

First form: A natural language is used for description, and a slot manner is used. For example, the execution device information is in a form of room (room): "bedroom", and device (device): "light".

Second form: An underlying protocol parameter is used for description, to directly record underlying device details. For example, device information described in a natural language like "bedroom" and "light" is converted into protocol descriptions of a device. For example, the "bedroom" and "light" are mapped to parameters such as a device identifier (deviceID) and a device type (deviceType) that comply with the Internet of Things (internet of things, IoT) protocol. The mapped parameter is carried in a control instruction and sent to the execution device, so that the device can be controlled to execute the control instruction.

The intent and the slot together constitute a "user action". An electronic device cannot directly understand the natural language. Therefore, the intent recognition is used to map the natural language or an operation to a structured semantic representation that can be understood by a machine.

A requirement of "Control the temperature on the air conditioner" is used as an example, to describe a result of parsing a speech instruction by a voice assistant.

The speech instruction input by the user is "Slightly turn up the temperature on the air conditioner in the living room".

The user intent obtained through parsing is "Turn up the temperature (TURN_UP_TEMPERATURE)".

Slots obtained through parsing include: Slot 1 (location): living room; and Slot 2 (execution device): air conditioner.

In this embodiment of this application, the speech instruction is represented in different data forms in different processing phases. For example, in a receiving phase, the electronic device receives audio data of the speech instruction, the audio data of the speech instruction may be converted into corresponding text data, and the text data of the speech instruction may be parsed into structured data of the speech instruction, for example, including the intent and the slot. Further, the slot of the speech instruction may be represented as a slot described in the natural language (for example, a device name, for example, an "air conditioner"), or may be further mapped to the underlying protocol parameter (for example, the device type or the device identifier). The structured data of the speech instruction may be further converted into the control instruction that can be recognized by the execution device, so that the execution device performs a corresponding operation.

In the following descriptions of this specification, in some parts, only a "speech instruction" is generally used for description. A person skilled in the art should understand a possible data form of the "speech instruction" based on context content.

### (3) Electronic device

In embodiments of this application, the electronic device may include devices such as a mobile phone, a personal computer (personal computer, PC), a tablet computer, a desktop computer (desktop computer), a handheld computer, a notebook computer (laptop computer), an ultra-mobile personal computer (ultra-mobile personal computer, UMPC), a netbook, a personal digital assistant (personal digital assistant, PDA), a router, and a television. Alternatively, the electronic device may include a device that can access a home wireless local area network, for example, a speaker, a camera, an air conditioner, a refrigerator, a smart curtain, a table lamp, a chandelier, an electric rice cooker, a security protection device (like a smart electronic lock), a robot, a floor sweeper, and a smart scale. Alternatively, the electronic device may include wearable devices such as a smart headset, smart glasses, a smart watch, a smart band, an augmented reality (augmented reality, AR)\virtual reality (virtual reality, VR) device, a wireless locator, a tracker (Tracker), and an electronic collar. The electronic device in embodiments of this application may alternatively be a device like a car speaker or an in-vehicle air conditioner. A specific form of the electronic device is not specifically limited in embodiments of this application.

### (4) Cloud

The cloud is also referred to as a cloud platform, is a software platform that uses an application virtualization (application virtualization) technology, and integrates functions such as software search, download, use, management, and backup. On this platform, various types of common software can be encapsulated in an independent virtualization environment. In this way, application software is not coupled with a system.

The following describes in detail embodiments of this application with reference to accompanying drawings.

Several scenarios in embodiments of this application are first described.

### Scenario 1

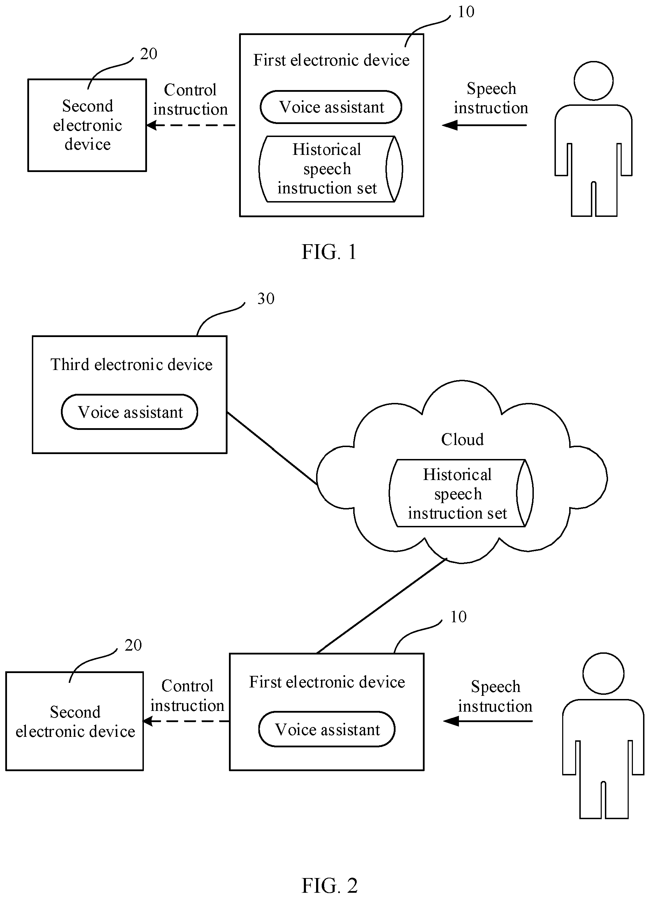

FIG. 1 is a diagram of a system architecture in Scenario 1 according to an embodiment of this application. As shown in the figure, a first electronic device 10 has an audio collection apparatus or module (for example, a microphone), and can receive a speech of a user. A voice assistant is further installed on the first electronic device 10. The first electronic device 10 further stores a set of speech instructions (referred to as a historical speech instruction set below) received and processed by the first electronic device 10. The historical speech instruction set includes at least one speech instruction.

Optionally, the first electronic device 10 may further establish a communication connection to a second electronic device 20. For example, the first electronic device 10 and the second electronic device 20 may be directly connected in a point-to-point manner, for example, through Bluetooth, or may be connected through a local area network, or may be connected through the Internet. This is not limited herein. There may be no voice assistant disposed on the second electronic device 20, and the second electronic device 20 does not have a speech instruction processing capability. Therefore, the second electronic device 20 needs to be connected to another electronic device (for example, the first electronic device 10), to be convenient for the another electronic device to process a speech instruction, and receives and responds to a control instruction sent by the another speech device based on the speech instruction. For example, the second electronic device 20 may be an air conditioner, a light, a curtain, or the like. Certainly, the second electronic device 20 may alternatively have a speech processing capability.

After receiving a speech instruction (also referred to as a speech signal) in an audio data form, the voice assistant recognizes the received speech instruction in the audio data form based on an ASR function, to obtain a speech instruction in a text form, and parses the speech instruction in the text form based on an NLU function. If there is no slot in the speech instruction or only a demonstrative pronoun is used to indicate a slot in the speech instruction, the voice assistant queries the historical speech instruction set stored on the first electronic device 10, to obtain a historical speech instruction related to the current speech instruction, and determines the slot of the current speech instruction based on a slot of the historical speech instruction, to complete the current speech instruction. Then, the voice assistant may execute the speech instruction.

Optionally, a manner in which the voice assistant executes the speech instruction may include the following several cases.

### Case 1:

If the voice assistant determines that a user intent of the speech instruction is to perform an operation, and an executor in the slot is an application or a service, the voice assistant implements the user intent by invoking a corresponding application or service on the first electronic device 10 or a cloud.

For example, if the speech instruction output by the user is "Pay", and the slot determined by the voice assistant based on the historical speech instruction set is an "Alipay" application, the voice assistant completes the speech instruction, where the completed speech instruction is "Use Alipay to pay". In this case, the voice assistant invokes the "Alipay" application installed on the electronic device to complete a payment operation.

For another example, if the speech instruction output by the user is "Back up a file", and the slot determined by the voice assistant based on the historical speech instruction set is a "Huawei Cloud" service, the voice assistant completes the speech instruction, where the completed speech instruction is "Back up a file to Huawei Cloud". In this case, the voice assistant invokes a corresponding service interface, and interacts with the cloud, to complete a corresponding operation through the service on the cloud.

### Case 2:

If the voice assistant determines that a user intent of the speech instruction is to perform an operation, and the slot is the first electronic device 10 on which the voice assistant is installed, the speech instruction invokes a corresponding function interface on the first electronic device 10, so that the first electronic device 10 executes the speech instruction.

For example, if the speech instruction output by the user is "Play the movie XXX", and the slot determined by the voice assistant based on the historical speech instruction set is a "television", the voice assistant completes the speech instruction, where the completed speech instruction is "Play the movie XXX on the television". In this case, the voice assistant invokes a related function interface of a smart television, so that the smart television responds to the speech instruction to play the movie.

### Case 3:

If the voice assistant determines that an intent of the speech instruction is to perform an operation, and an execution device in the slot is the second electronic device 20, the voice assistant generates, based on the speech instruction, a control instruction that can be recognized by the second electronic device 20, and sends the control instruction to the second electronic device 20, so that the second electronic device 20 executes the control instruction.

For example, if the speech instruction received by the first electronic device 10 (a smart speaker) is "Play the movie XXX", and the slot determined by the voice assistant based on the historical speech instruction set is a "television", the voice assistant completes the speech instruction, where the completed speech instruction is "Play the movie XXX on the television"; and the voice assistant converts the speech instruction into the control instruction that can be recognized by the second electronic device 20 (the television), and sends the control instruction to the second electronic device 20 (the television), so that the television plays the movie in response to the control instruction.

### Scenario 2

FIG. 2 is a diagram of a system architecture in Scenario 2 according to an embodiment of this application. As shown in the figure, a first electronic device 10 has an audio collection apparatus or module (for example, a microphone), and can receive a speech of a user. A voice assistant is also installed on the first electronic device 10. A historical speech instruction set is set on a cloud, and the first electronic device 10 may store, on the cloud, a speech instruction received and processed by the first electronic device 10. Optionally, another electronic device, for example, a third electronic device 30 in the figure, may store a received and processed speech instruction in the historical speech instruction set on the cloud.

Optionally, the first electronic device 10 may further establish a communication connection to a second electronic device 20. For example, the first electronic device 10 and the second electronic device 20 may be directly connected in a point-to-point manner, for example, through Bluetooth, or may be connected through a local area network, or may be connected through the Internet. This is not limited herein.

Optionally, the first electronic device 10 and the third electronic device 30 belong to a same group, electronic devices in the same group share a historical speech instruction set on the cloud, and electronic devices in different groups cannot share a same historical speech instruction set. Grouping may be set by the user. For example, electronic devices located in a same family inhabitancy place may be grouped into a same group, or electronic devices located in a plurality of inhabitancy places of a same family may be grouped into a same group. This is not limited in embodiments of this application.

In a possible implementation, after receiving a speech instruction in an audio data form, the voice assistant recognizes the received speech instruction in the audio data form based on an ASR function, to obtain a speech instruction in a text form, and parses the speech instruction in the text form based on an NLU function. If there is no slot in the speech instruction or only a demonstrative pronoun is used to indicate a slot in the speech instruction, the voice assistant queries the historical speech instruction set on the cloud, to obtain a historical speech instruction related to the current speech instruction, and determines the slot of the current speech instruction based on a slot of the historical speech instruction, to complete the current speech instruction. Then, the voice assistant may execute the speech instruction. For a manner of executing the speech instruction by the voice assistant, refer to related descriptions in the scenario.

### Scenario 3

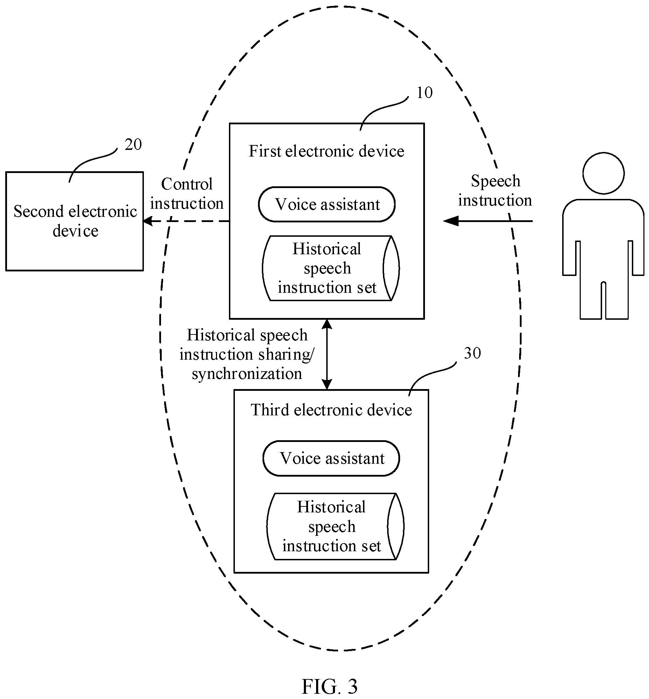

FIG. 3 is a diagram of a system architecture in Scenario 3 according to an embodiment of this application. As shown in the figure, a first electronic device 10 and a third electronic device 30 each have an audio collection apparatus or module (for example, a microphone), and can receive a speech of a user. A voice assistant is also installed on each of the first electronic device 10 and the third electronic device 30.

A communication connection is established between the first electronic device 10 and the electronic device 30. For example, the first electronic device 10 and the third electronic device 30 may be directly connected in a point-to-point manner, for example, through Bluetooth, or may be connected through a local area network, or may be connected through the Internet. This is not limited herein.

Optionally, the first electronic device 10 and the third electronic device 30 belong to a same group, electronic devices in the same group may share a historical speech instruction set, and electronic devices in different groups cannot share a historical speech instruction set. Grouping may be set by the user. For example, electronic devices located in a same family inhabitancy place may be set to be grouped into a same group, or electronic devices located in a plurality of inhabitancy places of a same family may be grouped into a same group. This is not limited in embodiments of this application.

The first electronic device 10 and the third electronic device 30 may share a historical speech instruction, so that a historical speech instruction set on the first electronic device 10 and a historical speech instruction set on the third electronic device 30 are synchronized. For example, after receiving and processing a speech instruction, the first electronic device 10 may store the processed speech instruction into the historical speech instruction set on the device, and send the speech instruction to the third electronic device 30, so that the third electronic device 30 stores the speech instruction into the historical speech instruction set on the third electronic device 30, to implement synchronization between the historical speech instruction set on the first electronic device 10 and the historical speech instruction set on the third electronic device 30. For another example, the historical speech instruction set on the first electronic device 10 and the historical speech instruction set on the third electronic device 30 may be synchronized based on specified time or a periodicity.

Optionally, the first electronic device 10 may further establish a communication connection to a second electronic device 20. For example, the first electronic device 10 and the second electronic device 20 may be directly connected in a point-to-point manner, for example, through Bluetooth, or may be connected through a local area network, or may be connected through the Internet. This is not limited herein.

After receiving a speech instruction in an audio data form, the voice assistant recognizes the received speech instruction in the audio data form based on an ASR function, to obtain a speech instruction in a text form, and parses the speech instruction in the text form based on an NLU function. If there is no slot in the speech instruction or only a demonstrative pronoun is used to indicate a slot in the speech instruction, the voice assistant queries the historical speech instruction set on the electronic device on which the voice assistant is installed (where the historical speech instruction set is a historical speech instruction set shared by a plurality of electronic devices), to obtain a historical speech instruction related to the current speech instruction, and determines the slot of the current speech instruction based on a slot of the historical speech instruction, to complete the current speech instruction. Then, the voice assistant may execute the speech instruction. For a manner of executing the speech instruction by the voice assistant, refer to related descriptions in the scenario.

### Scenario 4

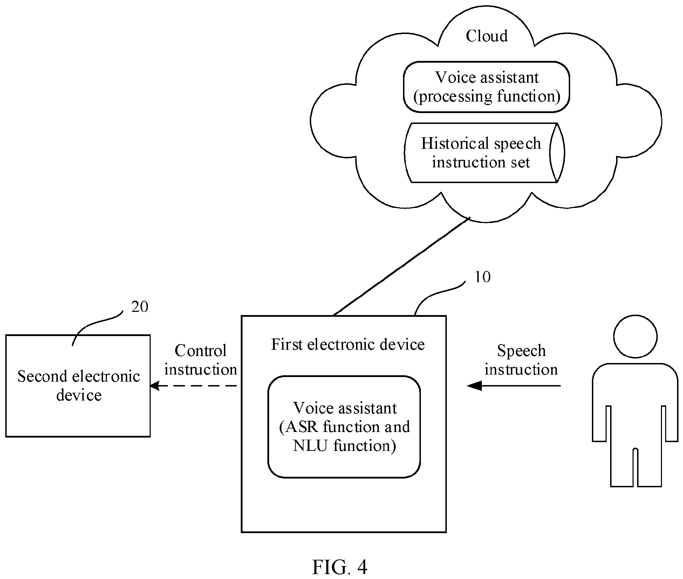

Some functions of a voice assistant may be deployed on a device side (an electronic device), and other functions are deployed on a cloud. FIG. 4 is an example of a diagram of a system architecture in Scenario 4 according to an embodiment of this application. As shown in the figure, an ASR function and an NLU function of the voice assistant are deployed on the first electronic device 10, a function of adding a slot for a speech instruction missing a slot (referred to as a processing function in embodiments of this application) is deployed on the cloud, and a historical speech instruction set is also deployed on the cloud.

A first electronic device 10 has an audio collection apparatus or module (for example, a microphone), and can receive a speech of a user. Optionally, the first electronic device 10 may further establish a communication connection to a second electronic device 20. There may be no voice assistant disposed on the second electronic device 20, and the second electronic device 20 does not have a speech instruction processing capability. Therefore, the second electronic device 20 needs to be connected to another electronic device (for example, the first electronic device 10), to be convenient for the another electronic device to process a speech instruction, and receives and responds to a control instruction sent by the another speech device based on the speech instruction. Certainly, the second electronic device 20 may alternatively have a speech processing capability.

After receiving a speech instruction in an audio data form, the first electronic device 10 recognizes the received speech instruction in the audio data form based on the ASR function, to obtain a speech instruction in a text form, and parses the speech instruction in the text form based on the NLU function. If there is no slot in the speech instruction or only a demonstrative pronoun is used to indicate a slot in the speech instruction, the voice assistant sends a request message to the cloud. The cloud obtains, based on the request message and the historical speech instruction set stored on the cloud, a historical speech instruction related to the current speech instruction, and sends related data of the related historical speech instruction to the first electronic device 10, so that the voice assistant on the first electronic device 10 can complete the current speech instruction by using a slot of the historical speech instruction. Then, the voice assistant may execute the speech instruction. For a manner of executing the speech instruction by the voice assistant, refer to related descriptions in the scenario.

### Scenario 5

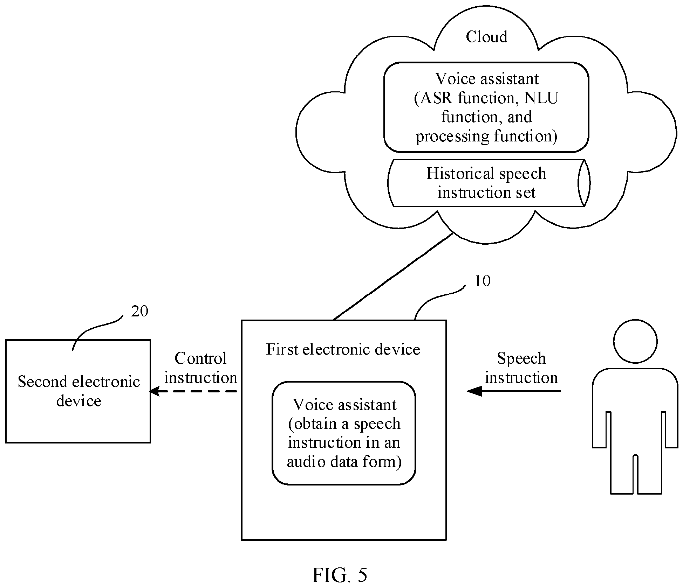

Some functions of a voice assistant may be deployed on a device side (an electronic device), and other functions are deployed on a cloud. FIG. 5 is an example of a diagram of a system architecture in Scenario 5 according to an embodiment of this application. As shown in the figure, an ASR function and an NLU function of the voice assistant are deployed on the cloud, a function of adding a slot for a speech instruction missing a slot (referred to as a processing function in embodiments of this application) is also deployed on the cloud, and the cloud further stores a historical speech instruction set.

A first electronic device 10 has an audio collection apparatus or module (for example, a microphone), and can receive a speech of a user. Optionally, the first electronic device 10 may further establish a communication connection to a second electronic device 20.

After receiving a speech instruction in an audio data form, the first electronic device 10 sends the speech instruction in the audio data form to the cloud; and the received speech instruction in the audio data form is recognized based on the ASR function on the cloud, to obtain a speech instruction in a text form, and the speech instruction in the text form is parsed based on the NLU function on the cloud. If there is no slot in the speech instruction or only a demonstrative pronoun is used to indicate a slot in the speech instruction, a historical speech instruction related to the current speech instruction is obtained based on the historical speech instruction set stored on the cloud, and related data of the related historical speech instruction is sent to the first electronic device 10, so that the voice assistant on the first electronic device 10 can complete the current speech instruction by using a slot of the historical speech instruction. Then, the voice assistant may execute the speech instruction. For a manner of executing the speech instruction by the voice assistant, refer to related descriptions in the scenario.

In another example, the ASR function may be deployed on an electronic device side.

It should be noted that the system architectures in the scenarios are merely some examples. This is not limited in embodiments of this application. For example, more electronic devices and more types of electronic devices may be included.

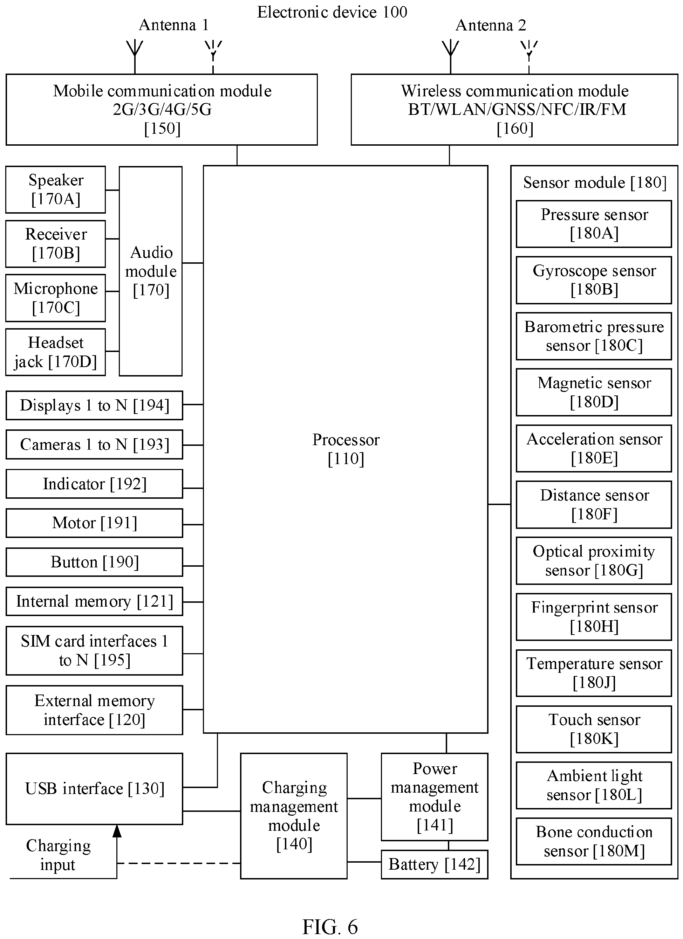

FIG. 6 is a diagram of a structure of hardware inside an electronic device 100 according to an embodiment of this application. The electronic device 100 may be the electronic device in each of the scenarios shown in FIG. 1, FIG. 2, and FIG. 3.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, and a microphone 170C. Further, the electronic device 100 may include a headset interface 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display process unit (display process unit, DPU), a neural-network processing unit (neural-network processing unit, NPU), and/or the like. Different processing units may be independent components, or may be integrated into one or more processors. In some embodiments, the electronic device 100 may alternatively include one or more processors 110. The processor may be a nerve center and a command center of the electronic device 100. The processor may generate an operation control signal based on instruction operation code and a time sequence signal, to complete control of instruction reading and instruction execution. A memory may be further disposed in the processor 110, and is configured to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing audio through the headset.

The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M.

The charging management module 140 is configured to receive a charging input from the charger. The power management module 141 is configured to connect the battery 142, the charging management module 140, and the processor 110. A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The electronic device 100 may implement an image shooting function by using the ISP, the camera 193, the video codec, the GPU, the display 194, the application processor, and the like.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The electronic device 100 may implement a display function by using the GPU, the display 194, the application processor (AP), and the like. The display 194 is configured to display an image, a video, or the like.

The electronic device 100 may implement an audio function, for example, music playing and recording, by using the audio module 170, the speaker 170A, the receiver 170B, the microphone 170C, the headset jack 170D, the application processor, and the like.

It may be understood that the structure shown in embodiments of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

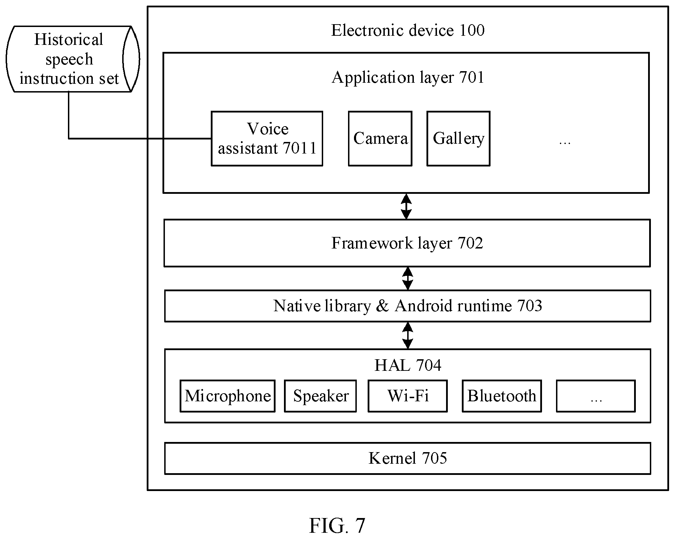

FIG. 7 is a diagram of a software structure of an electronic device according to an embodiment of this application. The electronic device may be the electronic device in each scenario shown in FIG. 1, FIG. 2, FIG. 3, FIG. 4, or FIG. 5.

The electronic device 100 is used as an example, a software architecture of the electronic device 100 may include an application layer 701, a framework layer 702, a native library (native library) and Android runtime (Android Runtime) 703, a hardware abstraction layer (hardware abstraction layer, HAL) 704, and a kernel 705. In this embodiment of this application, an example in which an operating system of the electronic device 100 is an Android system is used for description. Alternatively, the electronic device 100 may be a HarmonyOS, an iOS system, or another operating system. This is not limited in embodiments of this application.

The application layer 701 may include a voice assistant 7011. Optionally, the application layer 701 may further include other applications. For example, the other applications may include Camera, Gallery, Calendar, Phone, Map, Navigation, Music, Video, Messages, and the like. This is not limited in embodiments of this application.

The voice assistant 7011 may control the electronic device 100 to communicate with the user through speeches. The voice assistant 7011 may access a historical speech instruction set, to obtain, based on the historical speech instruction set, a historical speech instruction related to a current speech instruction, so as to determine a missing slot in the current speech instruction based on a slot of the historical speech instruction. Optionally, the historical speech instruction set may be deployed locally on the electronic device 100, or may be deployed on a cloud. If the voice assistant 7011 is deployed on the cloud, the voice assistant 7011 may access the cloud historical speech instruction set by using a communication module of the electronic device 100, or may request the cloud to query the historical speech instruction related to the current speech instruction.

The framework layer 702 may include an activity manager, a window manager, a content provider, a resource manager, a notification manager, and the like. This is not limited in embodiments of this application.

The native library and Android runtime 703 includes a core library and a virtual machine. The Android runtime is responsible for scheduling and management of the Android system. The kernel library includes two parts: a function that needs to be invoked in Java language and a kernel library of Android. The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The HAL 704 may include a microphone, a speaker, a Wi-Fi module, a Bluetooth module, a camera, a sensor, and the like.

The kernel 705 is a layer between hardware and software. The kernel layer includes at least a display driver, a camera driver, an audio driver, and a sensor driver.

It should be understood that modules included in the layers shown in FIG. 7 are modules in embodiments of this application, and the modules included in the layers do not limit a structure of the electronic device and a layer (example description) at which a module is deployed. In an embodiment, the modules shown in FIG. 7 may be separately deployed, or several modules may be deployed together. Division of the modules in FIG. 7 is an example. In an embodiment, names of modules shown in FIG. 7 are examples for description.

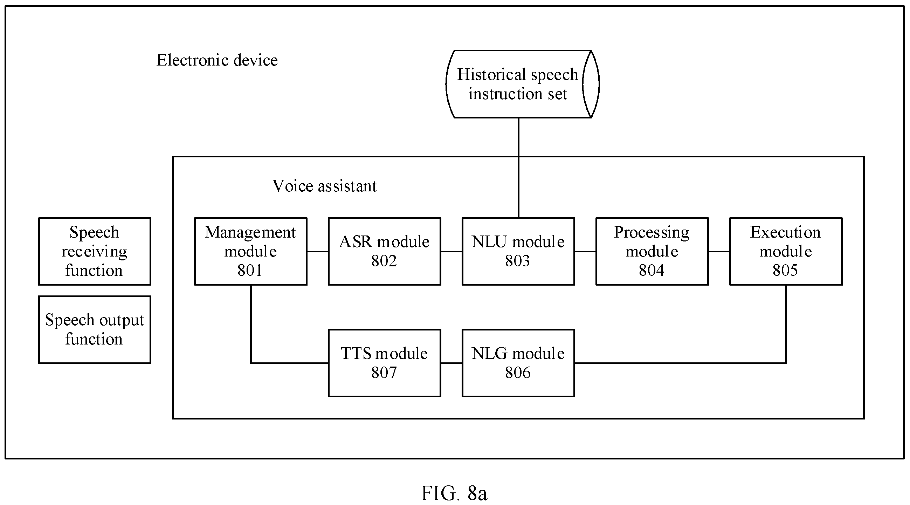

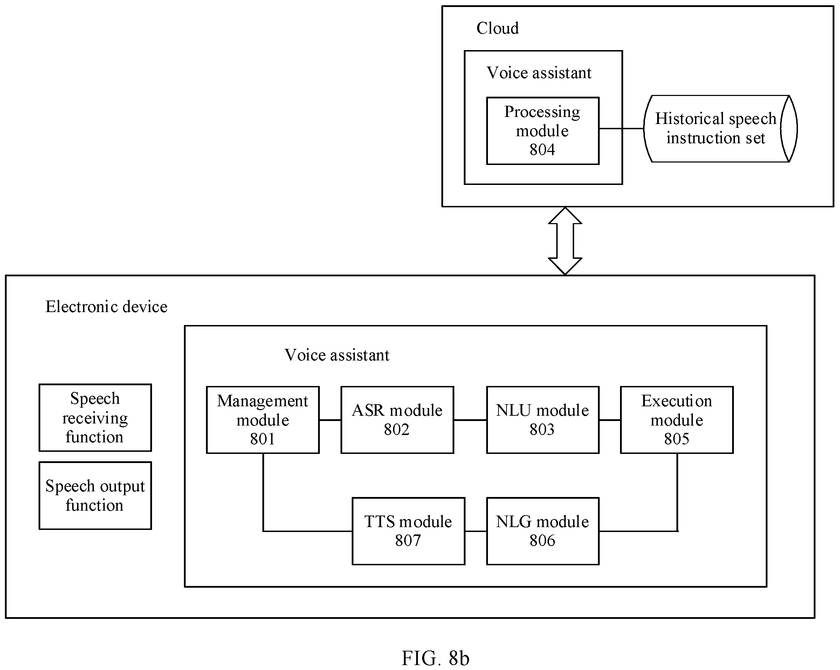

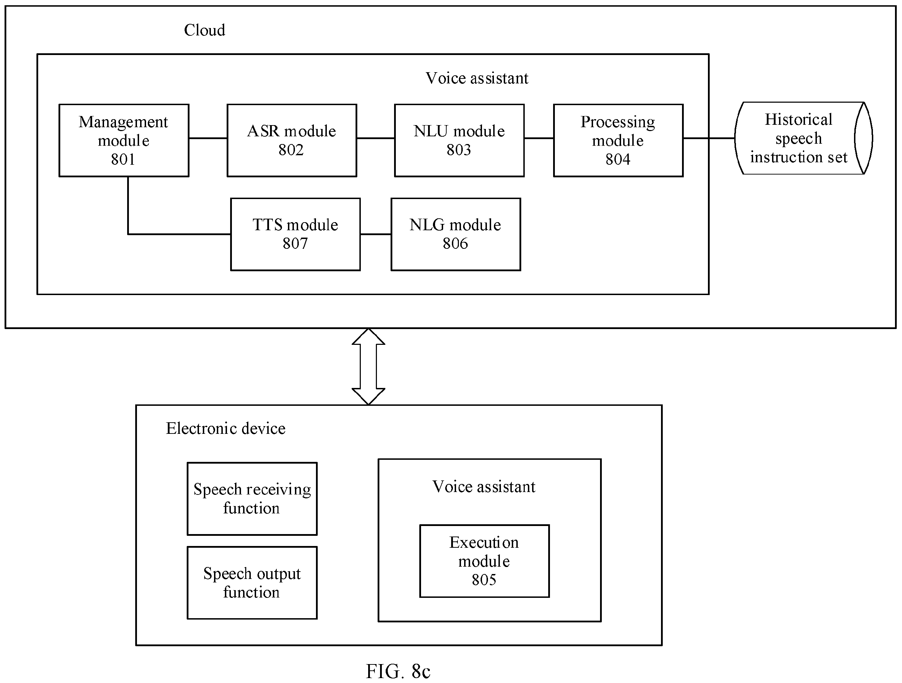

All functions of a voice assistant in embodiments of this application may be deployed on an electronic device, or all functions of a voice assistant are deployed on a cloud, or some functions are deployed on an electronic device, and some functions are deployed on a cloud. FIG. 8a, FIG. 8b, and FIG. 8c respectively show several possible deployment manners.

FIG. 8a is an example of a diagram in which all functions of a voice assistant are deployed on an electronic device. As shown in the figure, the electronic device has a speech receiving function and a speech output function. The voice assistant is installed on the electronic device. The voice assistant may include a management module 801, an ASR module 802, an NLU module 803, a processing module 804, and an execution module 805. Further, the voice assistant may include a natural language generation (natural language generation, NLG) module 806 and a text-to-speech (text to speech, TTS) module 807.

The management module 801 is configured to: collect a speech signal (which may also be referred to as speech data, audio data of a speech instruction, an audio signal, or the like, and is referred to as a speech for short) by using a microphone, and play, by using a speaker, audio data that needs to be output.

The ASR module 802 is configured to convert the audio data of the speech instruction into text data. For example, a speech "Xiao Yi, play music" input by a user by using the microphone is converted into text data (which may be referred to as text information, and is referred to as a text for short) that can be recognized by an application.

The NLU module 803 is configured to parse the text data of the speech instruction, to obtain a user intent and a slot, for example, recognize, from the text data "Xiao Yi, play music", that the user intent is "Play music".

The processing module 804 is configured to: if a slot is missing in a data structure that is of the speech instruction and that is obtained by the NLU module 803 through parsing, obtain, based on a historical speech data set, a historical speech instruction related to the current speech instruction, and add the slot of the current speech instruction based on a slot of the historical speech instruction. Further, the completed speech instruction may be provided for the execution module 805, or may be sent to the NLU module 803, and then the NLU module 803 sends the completed speech instruction to the execution module 805. In another possible implementation, the processing module 804 may alternatively send, to the NLU module 803, a slot that is to be added to a first speech instruction, and the NLU module 803 completes the first speech instruction and sends the completed first speech instruction to the execution module 805.

The execution module 805 is configured to execute a corresponding task on the device based on the user intent and the slot that are obtained through parsing, that is, respond based on the user intent. For example, when the user intent is "Play music", and the execution device in the slot is a "smartphone", the execution module 805 may invoke a music player on the device (the smartphone) to play music. In some other scenarios, if the slot obtained through parsing indicates that an executor of the user intent is a cloud service, the execution module 805 may invoke a corresponding cloud service, to execute the user intent. In some other scenarios, if the slot obtained through parsing indicates that an executor of the user intent is another electronic device instead of the device, the execution module 805 may generate, based on the user intent and the slot, a control instruction that can be recognized by the another electronic device, and send the control instruction to the another electronic device by using a communication module of the electronic device 100. The execution module 805 may further send an execution result (in a structured data form) of the speech instruction to the NLG module 806.

The NLG module 806 is configured to generate an execution result in a natural language form based on the execution result (structured data) of the speech instruction, for example, generate reply information "OK, music is played" in a natural language based on structured data of the reply information.

The TTS module 807 is configured to convert text data of the execution result from the NLG module 806 into audio data, and may send the audio data of the execution result to the management module 801. The management module 801 may send the audio data of the execution result to the speaker for playing.

Optionally, after the current speech instruction is completed, the processing module 804 stores the current speech instruction into a historical speech instruction set. The processing module 804 may further share or synchronize the historical speech instruction set on the device with a historical speech data set on another electronic device.

FIG. 8b is a diagram of deployment of another voice assistant according to an embodiment of this application. A processing module 804 in the voice assistant is deployed on a cloud, a historical speech instruction set is also deployed on the cloud, and another functional module is deployed on an electronic device.

FIG. 8c is a diagram of deployment of another voice assistant according to an embodiment of this application. A management module 801, an ASR module 802, an NLU module 803, and a processing module 804 in the voice assistant are deployed on a cloud, and a historical speech instruction set is also deployed on the cloud. An NLG module 806 and a TTS module 807 may also be deployed on the cloud. An electronic device has a speech receiving function and a speech output function, and may receive audio data of a speech instruction, or may output a speech of an execution result of the speech instruction.

It should be noted that FIG. 8a, FIG. 8b, and FIG. 8c only show examples of several deployment cases of functional modules in the voice assistant. In an actual application scenario, there may be another deployment case or another division manner of the functional modules. This is not limited in embodiments of this application.

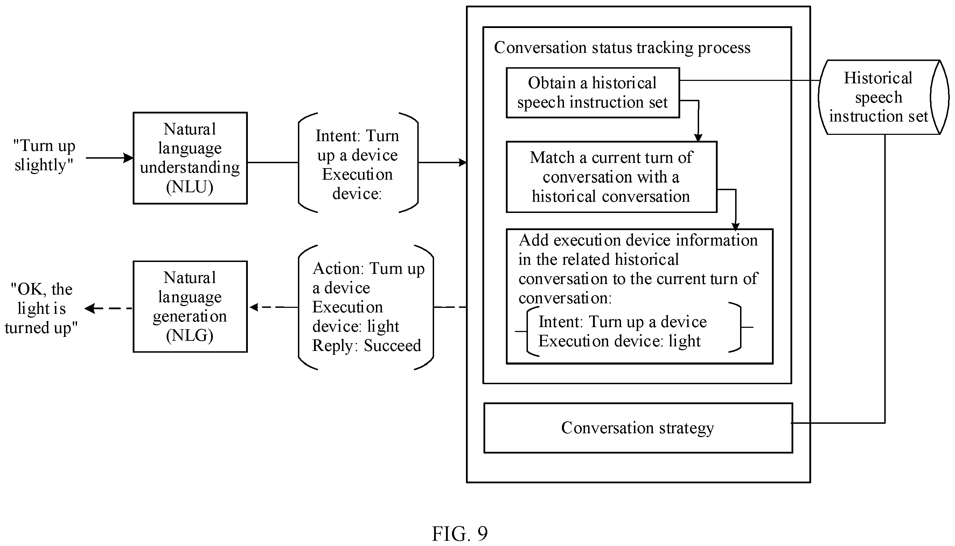

In FIG. 9, a specific application scenario is used as an example. FIG. 9 is a diagram of execution logic of a speech instruction processing method according to an embodiment of this application. As shown in the figure, when a user uses a voice assistant, the following procedure is used: First, the user sends a speech "Turn up slightly" to an electronic device on which the voice assistant is installed, and the voice assistant converts the speech into a text. Then, an NLU module of the voice assistant performs natural language processing on the text, and extracts a user intent of turning up the device. Because a slot (an execution device) is missing, the voice assistant starts the following conversation status tracking process:

The voice assistant obtains a historical speech instruction set, matches a current turn of conversation (a current speech instruction) with a historical speech instruction in the historical speech instruction set, to obtain a historical turn of conversation related to the current turn of conversation, and adds execution device information in the related historical turn of conversation to the slot of the current turn of conversation. The completed current turn of conversation is as follows:
Intent: Turn up the device; and
Slot: light.

The voice assistant converts the speech instruction of the completed current turn of conversation into a control instruction that can be recognized and executed by the execution device "light", and sends the control instruction to the execution device "light", so that the execution device executes the control instruction.

Optionally, after completing the speech instruction corresponding to the current turn, the voice assistant further starts the following conversation strategy process: storing the completed speech instruction into the historical speech instruction set. The historical speech instruction set may be deployed locally on the electronic device, or may be deployed on a cloud.

Optionally, after receiving execution success information fed back by the execution device "light", the voice assistant generates a data structure of a reply speech:
Action: Turn up the device;
Execution device: light; and
Reply: Succeed.

A natural language "OK, the light is turned up" is generated by using an NLG module in the voice assistant based on the data structure of the reply speech, the natural language is converted into audio data by using a TTS module, and the audio data is played.

The following describes, based on the software architecture of the voice assistant and the speech instruction processing logic, the speech instruction processing method provided in embodiments of this application.

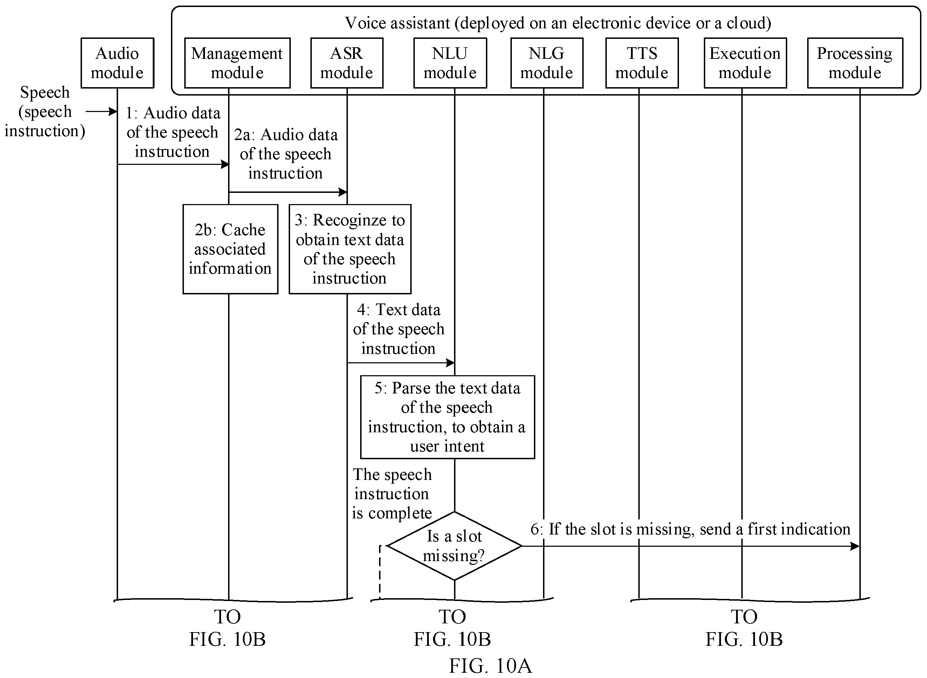

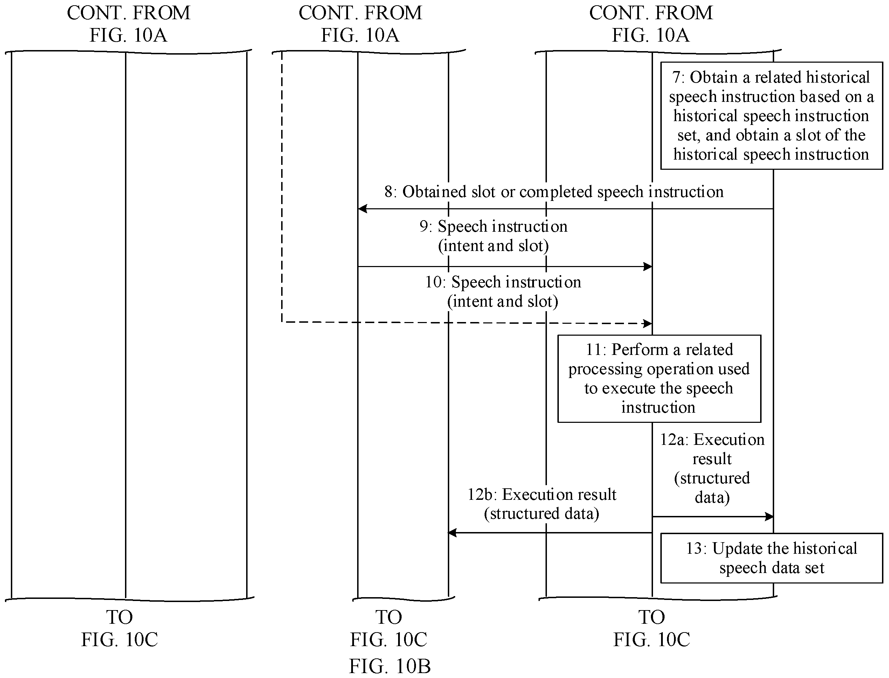

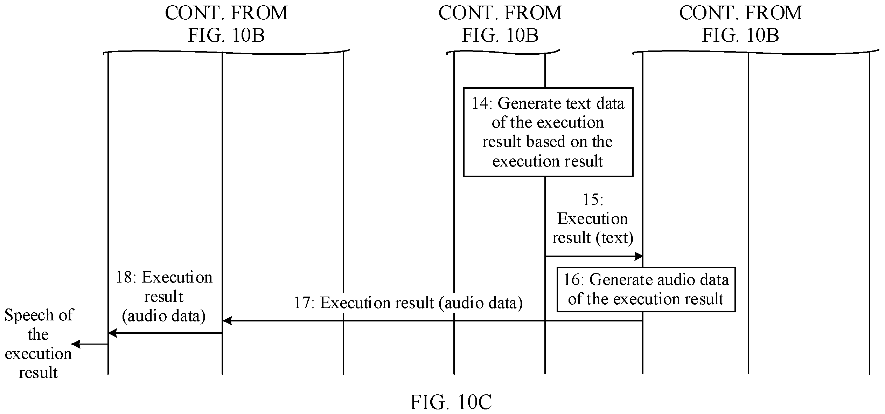

FIG. 10A to FIG. 10C are a schematic flowchart of a speech instruction processing method according to an embodiment of this application. In this procedure, for a current speech instruction that misses a slot (for example, misses an execution device), a voice assistant may obtain, based on a historical speech instruction set, a historical speech instruction related to the speech instruction, and add a slot of the historical speech instruction to the current speech instruction, so that the current speech instruction is complete.

In the procedure shown in FIG. 10A to FIG. 10C, a function of the voice assistant is deployed on an electronic device, that is, the procedure may be applied to the architecture shown in FIG. 8a. The function of the voice assistant may alternatively be deployed on a cloud, that is, the procedure may alternatively be applied to the architecture shown in FIG. 8c. As shown in FIG. 10A to FIG. 10C, the procedure may include the following steps.

Step 1: An audio module in an electronic device receives a speech of a user, to obtain audio data of a speech instruction, and sends the audio data of the speech instruction to a management module in a voice assistant.

Optionally, before using the voice assistant, the user first logs in to the voice assistant by using a user account. After the voice assistant is logged in, an audio module (for example, a microphone) of the electronic device is activated. When the user makes the speech, the microphone receives the speech of the user, to obtain the audio data of the speech instruction.

Step 2a: After receiving the audio data of the speech instruction, the management module in the voice assistant sends the audio data of the speech instruction to an ASR module in the voice assistant.

Step 2b: Optionally, the management module may further cache information such as device information, location information, user account information, time information, and user identity information, for example, cache the information to a specified area in a memory, or notify a related functional module (for example, a processing module) of a cache address after caching the information, so that the processing module can obtain the information, and use the information as associated information corresponding to the current speech instruction and as a basis for obtaining a historical speech instruction related to the current speech instruction.

The device information is information about a device that receives the speech instruction. For example, the device information may include a device type, a device identifier (deviceID), a device status, a device name, and the like. The location information is location information of a receiving device of the current speech instruction. The user account information is account information of the user who logs in to the voice assistant. For example, the user account information may include a user identifier. The time information is current time. The user identity information may be feature information (a voiceprint) of the audio data, and may be obtained by performing feature extraction on the audio data of the received speech instruction. The user identity information may alternatively be information (for example, may be a member role of the user in a family) that can indicate a user identity, for example, a user identifier. After the feature information of the audio data of the speech instruction is extracted, a user list (where a correspondence between a voiceprint and a user identifier is recorded in the user list) may be queried based on the feature information to obtain a corresponding user identifier. One or more of the device information, the user account information, the time information, and the user identity information may be used as the associated information corresponding to the current speech instruction, and used for a subsequent speech instruction processing process.

Step 3: The ASR module in the voice assistant recognizes the audio data of the speech instruction, to obtain text data of the speech instruction.

The ASR module may recognize the audio data of the speech instruction according to an ASR algorithm. The ASR algorithm is not limited in embodiments of this application.

Step 4: The ASR module in the voice assistant sends the text data of the speech instruction to an NLU module.

Step 5: The NLU module in the voice assistant parses the text data of the speech instruction, to obtain a user intent.

When the NLU module parses the text data of the speech instruction, if the user intent and a slot are obtained through parsing, semantic meaning of the speech instruction is complete, and therefore, subsequent step 10 is performed, that is, structured data (including the user intent and the slot) of the speech instruction is sent to an execution module; or if the user intent is obtained through parsing, but no slot is obtained through parsing, or the slot is indicated by using a demonstrative pronoun, it indicates that the semantic meaning of the speech instruction is incomplete, and in this case, subsequent steps 6 to 9 are performed.

The NLU module may parse the text data of the speech instruction according to an NLU algorithm. The NLU algorithm is not limited in embodiments of this application.

Step 6: The NLU module in the voice assistant sends first indication information to the processing module, to indicate the processing module to obtain the missing slot in the speech instruction.

Optionally, the first indication information may include the user intent obtained by the NLU module through parsing.

Step 7: The processing module in the voice assistant obtains, based on the first indication information, the related historical speech instruction by querying a historical speech instruction set, and further obtains a slot of the historical speech instruction.

Optionally, the processing module may obtain the previously cached associated information corresponding to the current speech instruction, and use the associated information as one of bases for obtaining the matched historical speech instruction.

Optionally, after obtaining response information indicating that the speech instruction is successfully executed, the processing module may further store the speech instruction and the associated information corresponding to the speech instruction into the historical speech instruction set, to facilitate processing, based on the historical speech instruction set in a subsequent turn of conversation, on a speech instruction whose semantic meaning is missing.

Optionally, the historical speech instruction in the historical speech instruction set may be structured data. Correspondingly, when a second speech instruction related to a first speech instruction is obtained based on the historical speech instruction set, structured data of the first speech instruction may be used to match with the structured data of the historical speech instruction. The structured data of the historical speech instruction includes a user intent and a slot. The slot is described in a natural language, for example, an "air conditioner". The structured data may be obtained by the NLU module in the voice assistant through parsing. When a part of the structured data obtained by the NLU module through parsing is missing (for example, the slot is missing), the missing part (for example, the slot) may be added, and the completed structured data is stored in the historical speech instruction set. An example of the structured data of the historical speech instruction is as follows:
User intent: Turn up the temperature (TURN_UP_TEMPERATURE); and
Slot: Slot 1 (location): living room; and Slot 2 (execution device): air conditioner.

Optionally, when the historical speech instruction in the historical speech instruction set is stored in a structured data form, the slot in the structured data may alternatively be an underlying protocol parameter obtained through underlying protocol mapping. For example, the "living room" and the "air conditioner" may be mapped to a device identifier (deviceID) used to uniquely identify the electronic device (air conditioner). In this structured data form, the slot obtained based on the historical speech instruction set is the underlying protocol parameter, and parsing or feature extraction does not need to be performed again. The underlying protocol parameter may be directly added to the speech instruction whose semantic meaning is incomplete (the slot is missing). An example of the structured data of the historical speech instruction is as follows:
User intent: Turn up the temperature (TURN UP_TEMPERATURE); and
Slot: deviceID_air-conditioning_01. Herein, "deviceID _air-conditioning_01" indicates a device identifier of the air conditioner located in the living room.

Optionally, the historical speech instruction in the historical speech instruction set may be text data. Correspondingly, when a second speech instruction related to a first speech instruction is obtained based on the historical speech instruction set, text data of the first speech instruction may be used to match with the text data of the historical speech instruction. The text data of the historical speech instruction may be obtained by the ASR module in the voice assistant through recognition based on audio data of the speech instruction; or may be obtained by completing semantic meaning of the speech instruction when the semantic meaning of the speech instruction obtained by the ASR module through recognition is incomplete. An example of the text data of the historical speech instruction is "Slightly turn up the temperature on the air conditioner in the living room".

Optionally, the historical speech instruction set may further include associated information corresponding to the historical speech instruction. Optionally, associated information corresponding to one historical speech instruction may include information in one or more dimensions. For example, the associated information corresponding to one historical speech instruction may include at least one of the following pieces of information: time information, device information of a receiving device, location information of the receiving device, user account information, user identity information, and the like. The associated information corresponding to one historical speech instruction is collected when the historical speech instruction is received.

The time information in the associated information corresponding to one historical speech instruction may be time at which the historical speech instruction is received or time at which processing of the speech instruction is completed (for example, time at which ASR processing performed on the speech instruction is completed, or time at which NLU processing is performed on the speech instruction). The device information in the associated information is device information of the receiving device of the historical speech instruction. For example, the device information may include a device type, a device identifier (deviceID), a device status, a device name, and the like. The user account information in the associated information indicates a user logging in to the voice assistant when the historical speech instruction is received and processed. The user identity information in the associated information indicates a user sending the historical speech instruction. For example, if a historical speech instruction x corresponds to a user identifier y, it indicates that the historical speech instruction x is a speech instruction received and processed by the user after the user logs in to the voice assistant based on the user identifier y. For explanations and descriptions of the associated information corresponding to the speech instruction, refer to related descriptions in step 2.

According to the foregoing embodiment, an example of the historical speech instruction set may be shown in Table 1.

**Table 1: Historical speech instruction set**

| Speech instruction | User account information (user identifier) | User identity information | Receiving device | Time |
|---|---|---|---|---|
| User intent: Turn up a temperature (TURN_UP_TEMPERATURE); Slot: deviceID_air-conditioning_01 | UserID_01 | Family member 1 | Smart speaker in the living room | 21:00, January 1, 2022 |
| User intent: Turn up luminance (TURN_UP_LUMINANCE); Slot: deviceID_ Lighting_01 | UserID_01 | Family member 2 | Smart speaker in the living room | 21:30, January 1, 2022 |
| ... | ... | | ... | ... |

In Table 1, the associated information corresponding to one historical speech instruction includes the user account information, the user identity information, the receiving device, and the time.

Optionally, the associated information corresponding to one speech instruction may further include information such as a time interval between time at which the speech instruction is received and time at which a previous speech instruction is received, a conversation location, and a semantic meaning correlation, and may further include information such as a physiological feature of the user, a peripheral device list of the receiving device of the current speech instruction, and a quantity of conversation turns. Details are not listed herein. After receiving a speech instruction, the voice assistant may collect the information, to obtain associated information corresponding to the speech instruction. The associated information and the speech instruction may be stored in the historical speech instruction set together.

In a possible implementation, in a speech conversation process, after the voice assistant parses the speech instruction, to obtain a type of the execution device, if there are a plurality of devices of the type, the voice assistant gives a speech prompt, to make the user clarify or select from the plurality of devices. After obtaining the execution device selected by the user, the voice assistant generates a control instruction based on the speech instruction, and sends the control instruction to the execution device for execution; and in addition, the voice assistant updates the structured data of the speech instruction based on the execution device selected by the user, for example, updates execution device information of the speech instruction, and stores updated structured data of the speech instruction in the historical speech instruction set.

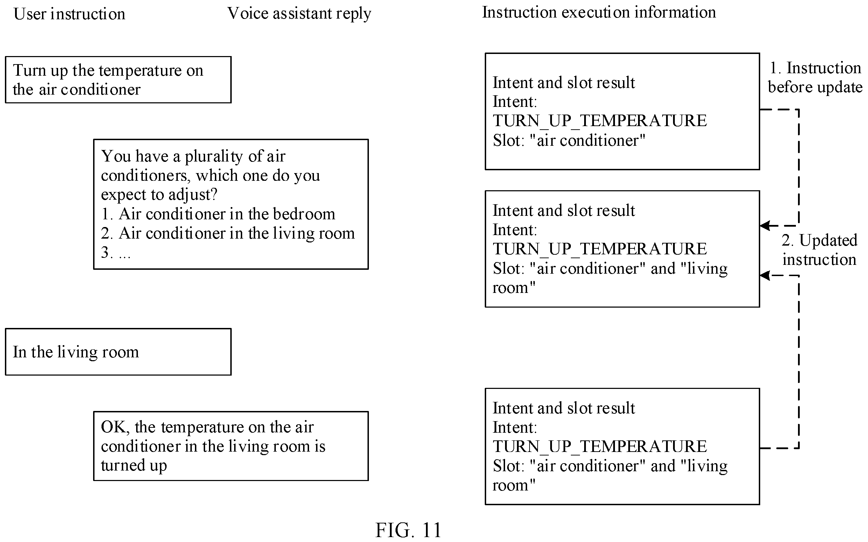

For example, FIG. 11 is a diagram of clarifying an execution device through multi-turn conversations. As shown in the figure, after the speech of the user received by the voice assistant is "Turn up the temperature on the air conditioner", the speech is recognized as a text, and this file is parsed, to obtain structured data 1 of the speech instruction.
User intent: TURN_UP_TEMPERATURE; and
Slot: "air conditioner".

The voice assistant determines that the type of the execution device is an air conditioner, queries registered devices of this type, and finds that there are a plurality of candidate execution devices such as "air conditioner in the bedroom" and "air conditioner in the living room", and outputs a prompt speech "You have a plurality of air conditioners, which one do you expect to adjust: 1. Air conditioner in the bedroom; 2. Air conditioner in the living room; 3...." to the user.

After receiving a user speech "In the living room" used to select the execution device, the voice assistant converts the speech into a text, parses the text, and updates the structured data 1 of the speech instruction based on an execution device obtained through parsing, to obtain, through updating, structured data 2 or structured data 3 of the speech instruction.
Structured data 2:
   User intent: TURN UP_TEMPERATURE; and
   Slot: "air conditioner" and "living room".
Structured data 3:
   User intent: TURN UP_TEMPERATURE; and
   Slot: deviceID_air-conditioning_01.

Herein, "deviceID _air-conditioning_001" in the structured data 3 indicates a device identifier of the air conditioner located in the living room, and is obtained by mapping the "air conditioner" and the "living room" described in the natural language.

The structured data 2 or the structured data 3 of the speech instruction is stored in the historical speech instruction set.

In a possible implementation, in the speech conversation process, the voice assistant parses the speech instruction. If the speech instruction misses the execution device, the voice assistant may select a default execution device as the execution device of the speech instruction. The voice assistant determines, based on an execution result, that the speech instruction fails to be executed, and determines that a failure cause is an execution device error. In this case, the voice assistant may initiate a conversation with the user, to query the user about the execution device. After obtaining the execution device, updating the structured data of the speech instruction, sending the corresponding control instruction to the execution device, and receiving a response indicating that execution succeeds, the voice assistant may store the updated structured data of the speech instruction in the historical speech instruction set.

In a possible implementation, to save storage space, a historical speech instruction whose time interval from current time exceeds a specified threshold may be cleared from the historical speech instruction set.

In a possible implementation, the historical speech instruction set is stored locally on the electronic device, and the speech instruction in the historical speech instruction set includes only a speech instruction received and processed by the device.

In another possible implementation, the historical speech instruction set is stored locally on the electronic device, and the speech instruction in the historical speech instruction set includes a speech instruction received and processed by the device, and may further include a speech instruction received and processed by another electronic device. A communication connection may be established between a plurality of electronic devices, to synchronize a historical speech instruction with each other. The historical speech instruction may be synchronized between these electronic devices based on a specified periodicity or specified time, or after one of the electronic devices receives and processes the speech instruction, the electronic device uses the speech instruction as the historical speech instruction and synchronizes the historical speech instruction to another electronic device.

Optionally, the electronic devices that synchronize or share the historical speech instruction with each other may be preconfigured as a group, and group information may be configured on each of the electronic devices. The group information may include information such as a group identifier, and an identifier or an address of each member device in the group. A connection may be established between member devices in a group based on the group information, or a communication connection may be established based on a user operation, for example, a Bluetooth connection is established in response to a Bluetooth pairing operation of the user.

Optionally, all or some electronic devices in an area (for example, a family residence) may be grouped into one group. Electronic devices in a group may include different types of electronic devices, for example, may include a smart speaker, a smart television, and a smartphone.

Optionally, the member devices in a group may be electronic devices associated with same user account information. For example, in a case in which one electronic device is associated with only one user account (that is, in a case in which one electronic device can use only one user account to log in to the voice assistant on the electronic device), electronic devices associated with a same user account may be grouped into one group.

Optionally, one group or a plurality of groups may be configured. The member devices in a same group share a historical speech instruction set.

In another possible implementation, the historical speech instruction set is stored on a network side, for example, stored on the cloud. A storage address of the historical speech instruction set on the cloud may be configured on the electronic device, so that the electronic device can store the historical speech instruction into the historical speech instruction set on the cloud.

A manner in which the electronic device queries the historical speech instruction set based on a storage location of the historical speech instruction set may include the following manners:
Manner 1: When the electronic device locally stores the historical speech instruction set, the electronic device may directly query the locally stored historical speech instruction set.
Manner 2: When the historical speech instruction set is stored on the cloud, the electronic device may interact with the cloud, to query the historical speech instruction set, for example, send a query request, where the query request may carry a query condition or a keyword, for example, a user intent, a time range, or a user identifier, to obtain a historical speech record that meets the query condition.

In a possible implementation, a process in which the processing module obtains, from the historical speech instruction set, the historical speech instruction related to the current speech instruction may include: determining a correlation degree between the historical speech instruction in the historical speech instruction set and the current speech instruction (the currently received speech instruction that misses a slot, namely, "the first speech instruction" in this embodiment of this application), and selecting, based on the correlation degree between the current speech instruction and each historical speech instruction from the historical speech instruction set, the historical speech instruction related to the current speech instruction, for example, selecting a historical speech instruction with a highest correlation degree.

Optionally, when calculating the correlation degree, the processing module may perform calculation based on the following information:
(1) calculating the correlation degree between the first speech instruction and the historical speech instruction based on the text data of the first speech instruction and the text data of the historical speech instruction;
(2) calculating the correlation degree between the first speech instruction and the historical speech instruction based on the structured data of the first speech instruction and the structured data of the historical speech instruction;
(3) calculating the correlation degree between the first speech instruction and the historical speech instruction based on an intent of the first speech instruction and an intent of the historical speech instruction;
(4) calculating the correlation degree between the first speech instruction and the historical speech instruction based on associated information corresponding to the first speech instruction and the associated information corresponding to the historical speech instruction;
(5) calculating the correlation degree between the first speech instruction and the historical speech instruction based on the first speech instruction (for example, text data or structured data) and the corresponding associated information, and the historical speech instruction (for example, text data or structured data) and the corresponding associated information;
(6) calculating the correlation degree between the first speech instruction and the historical speech instruction based on the intent of the first speech instruction and the associated information corresponding to the first speech instruction, and the intent of the historical speech instruction and the associated information corresponding to the historical speech instruction;
(7) calculating the correlation degree between the first speech instruction and the historical speech instruction based on the first speech instruction (for example, text data or structured data) and the corresponding associated information, and the historical speech instruction (for example, text data or structured data) and the corresponding associated information; and
(8) calculating the correlation degree between the first speech instruction and the historical speech instruction based on the first speech instruction (for example, text data), the intent of the first speech instruction, and the corresponding associated information; and the historical speech instruction (for example, text data), the intent of the historical speech instruction, and the corresponding associated information.

The foregoing merely lists several possible correlation degree calculation bases as examples. This is not limited in embodiments of this application.

Optionally, a correlation score may be used to indicate a correlation degree.

In a possible implementation, a process of calculating a correlation score may include: first, after receiving the current speech instruction, the electronic device obtains the associated information corresponding to the speech instruction, and then matches, according to a preset rule, the associated information corresponding to the current speech instruction with the associated information corresponding to the historical speech instruction, to obtain a correlation score of the current speech instruction and the historical speech instruction.

Optionally, the associated information may include information in one or more dimensions. For example, the associated information may include one or more of the following information: the information about the electronic device (for example, including the device name, the device type, and the device status), the user account information (user account information for logging in to the voice assistant), the user identity information (the user identity information is associated with the feature information of the audio data of the speech instruction), the time at which the speech instruction is received, information such as the time interval between the time at which the speech instruction is received and the time at which the previous speech instruction is received, the conversation location, and the semantic meaning correlation, the physiological feature of the user, the peripheral device list of the receiving device of the current speech instruction, the quantity of conversation turns, and the like. Correspondingly, when the correlation score is calculated, some rule methods may be used to calculate matching degrees between the current speech instruction and each historical speech instruction in these dimensions, and a correlation score is obtained through comprehensive calculation based on the matching degrees in these dimensions.

In another possible implementation, a process of calculating a correlation score may include: first, encoding the currently received speech instruction and the associated information corresponding to the speech instruction, for example, uniformly using a natural language encoder to encode historical conversation information (including an input text, a device status, and the like) in conversation scenarios on devices, so as to encode associated information of a historical turn and a current turn; and then, inputting an encoded result into a deep learning neural network for inference, to obtain a correlation score of the current speech instruction and the historical speech instruction.

It should be noted that the foregoing merely lists several methods for calculating a correlation degree (correlation score) as examples. A method for calculating a correlation degree (correlation score) between speech instructions is not limited in embodiments of this application.

In a possible implementation, if no related historical speech instruction is obtained based on the historical speech instruction set, the voice assistant may initiate a conversation with the user, to obtain a missing part in the speech instruction. For example, the voice assistant generates prompt information used to query a slot, indicate the user to provide a slot, or guide the user to provide a complete speech instruction, converts the prompt information into audio data, and outputs the prompt information by using an audio module, to indicate the user to provide a complete speech instruction.

Step 8: The processing module in the voice assistant sends the obtained slot to the NLU module, or sends a completed speech instruction to the NLU module.

Optionally, if the obtained related historical speech instruction is text data, the NLU module obtains, through parsing, the slot in the historical speech instruction, and adds the slot to the text data of the currently received speech instruction.

Optionally, if the obtained related historical speech instruction is structured data, and the slot in the structured data is described in the natural language, the NLU module may directly obtain the slot from the structured data, and add the slot to the structured data of the currently received speech instruction.

Optionally, if the obtained related historical speech instruction is structured data, and a slot in the structured data is a mapped underlying protocol parameter, for example, is mapped to a device identifier, the NLU module may directly add the mapped underlying protocol parameter to the structured data of the currently received speech instruction. In this case, the slot may not be mapped in subsequent steps. This reduces processing overheads.

Optionally, if the currently received speech instruction includes a demonstrative pronoun, and the demonstrative pronoun is used to indicate a slot, for example, used to indicate an execution device, after adding the slot to the structured data of the currently received speech instruction, the NLU module may delete the demonstrative pronoun in the speech instruction.

Step 9: The NLU module in the voice assistant sends the structured data (including the user intent and the slot) of the speech instruction to the execution module.

Optionally, if the slot obtained by the processing module is not mapped to the underlying protocol parameter, the NLU module may map the slot to the underlying protocol parameter, for example, map the slot to the device identifier, and send the mapped slot parameter to the execution module.

Step 11: After receiving the user intent and the slot of the speech instruction, the execution module in the voice assistant performs a related processing operation used to execute the speech instruction.

For example, the execution module may invoke a corresponding application program or service or a corresponding function on the device to execute the user intent, or generate, based on the speech instruction (including the user intent and the slot), a control instruction that can be recognized and executed by the execution device, and send the control instruction to the execution device.

For example, the control instruction may include general command information such as a command type and a command parameter, and further include device information of the execution device.

Optionally, if the slot in the structured data of the speech instruction is already the mapped underlying protocol parameter, the execution module may not need to perform mapping again; otherwise, the execution module needs to map the slot described in the natural language to the underlying protocol parameter.

Step 12a and step 12b: The execution module in the voice assistant sends the execution result of the speech instruction to the processing module and an NLG module.

If the speech instruction is executed by the device, the execution module may directly obtain the execution result of the speech instruction. If the speech instruction is executed by another electronic device, the execution module may receive the execution result of the speech instruction from the execution device of the speech instruction.

In this procedure, an example in which the execution result is that execution succeeds is used for description.

Step 13: If the processing module in the voice assistant determines, based on the execution result, that the speech instruction is successfully executed, the speech instruction and the associated information corresponding to the speech instruction are stored into the historical speech instruction set.

Based on a data requirement of the historical speech instruction in the historical speech instruction set, the historical data module may store the speech instruction into the historical speech instruction set based on this format requirement. For the data requirement of the historical speech instruction in the historical speech instruction set, refer to the foregoing descriptions.

Step 14: The NLG module in the voice assistant obtains, based on that the execution result is converted to be a natural language, text data of the execution result.

Step 15: The NLG module in the voice assistant sends the text data of the execution result to a TTS module.

Step 16: The TTS module in the voice assistant converts the text data of the execution result into audio data.

Step 17: The TTS module in the voice assistant sends the audio data of the execution result to the management module.

Step 18: The management module in the voice assistant sends the audio data of the execution result to the audio module (for example, a speaker), so that the audio module outputs a corresponding speech, to notify the user of the execution result of the speech instruction.

In another possible implementation, the processing module may alternatively send the completed speech instruction to the execution module without a need to send the completed speech instruction to the NLU module.

It should be noted that, if the voice assistant is deployed on the cloud, after receiving the audio data of the speech instruction, the electronic device sends the audio data to the cloud, and the voice assistant on the cloud performs corresponding processing. Optionally, the electronic device may further send the corresponding associated information (for example, the device information and location information of the electronic device) to the cloud, and the information may be cached on the cloud, so that the processing module performs a corresponding processing operation based on the information. Optionally, after the cloud receives the audio data of the speech instruction, the management module may obtain corresponding user identity information based on the audio data, and may further obtain information about a user account used to currently log in to the voice assistant, and cache the information, so that the processing module performs a corresponding processing operation based on the information.

In another possible implementation, if the voice assistant is deployed on the cloud, the voice assistant on the cloud may include the execution module, or may not include the execution module. If the voice assistant on the cloud includes the execution module, optionally, the execution module may convert the speech instruction into the control instruction that can be recognized by the execution device, and send the control instruction to the electronic device (the receiving device of the speech instruction), so that the electronic device executes the control instruction (if the electronic device is the execution device of the speech instruction), or the electronic device sends the control instruction to the execution device (if the electronic device is not the execution device of the speech instruction). Certainly, the cloud may also send the control instruction to the execution device, to implement remote control. If the voice assistant on the cloud side does not include the execution module, optionally, the cloud may send the completed speech instruction to the electronic device (the receiving device of the speech instruction), and the execution module in the receiving device performs corresponding processing.

It should be noted that the procedure shown in FIG. 10A to FIG. 10C is merely an example. A time sequence of steps in the foregoing procedure is not limited in embodiments of this application. For example, step 2a may alternatively be performed after step 2b.

It should be further noted that, in the procedure shown in FIG. 10A to FIG. 10C, some steps may be optional steps, for example, steps 12b to 18 may not be performed.

In the procedure shown in FIG. 10A to FIG. 10C, in a scenario in which the user uses a simplified speech instruction (for example, missing a slot), a missing part of the current speech instruction may be determined based on the historical speech instruction set, to complete the current speech instruction into a speech instruction with complete semantic meaning. This can ensure that the speech instruction can be executed, and improve user experience.

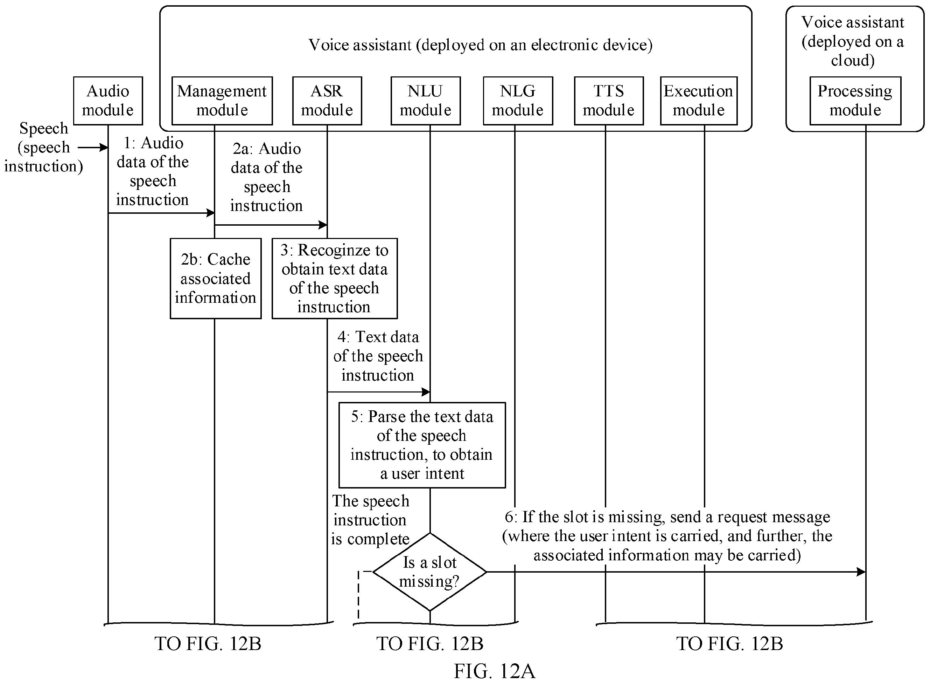

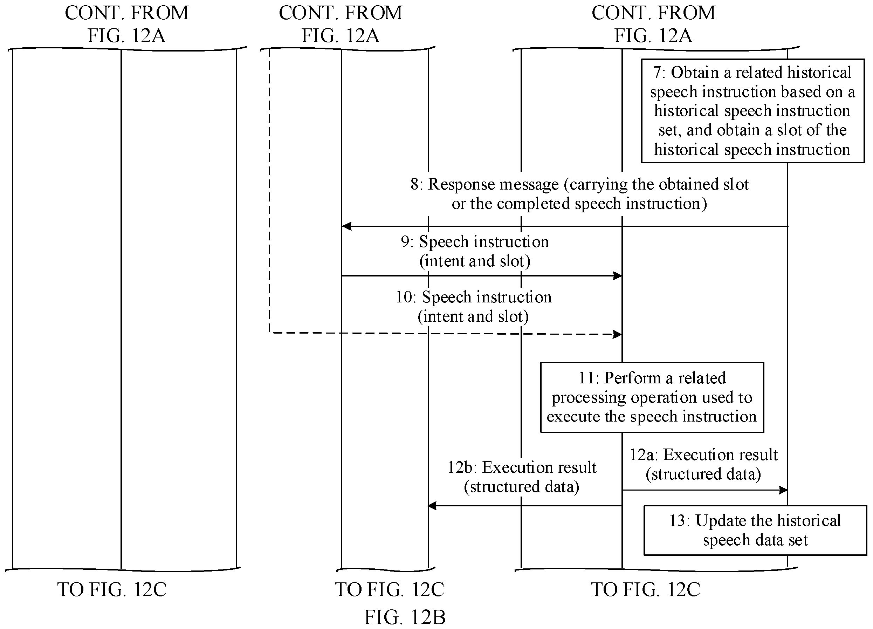

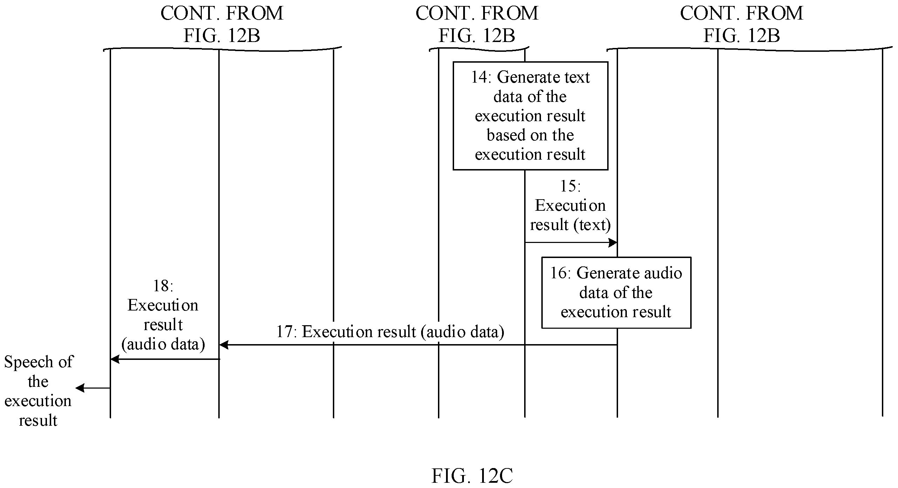

FIG. 12A to FIG. 12C are a schematic flowchart of another speech instruction processing method according to an embodiment of this application. In this procedure, for a current speech instruction that misses a slot (for example, misses an execution device), a voice assistant on an electronic device may request a cloud to obtain, based on a historical speech instruction set, a historical speech instruction related to the speech instruction, and after obtaining the related historical speech instruction, the voice assistant adds a slot of the historical speech instruction to the current speech instruction, so that the current speech instruction is complete.

In the procedure shown in FIG. 12A to FIG. 12C, some functions of the voice assistant are deployed on the electronic device, and some functions are deployed on the cloud, that is, the procedure may be applied to the architecture shown in FIG. 8b.

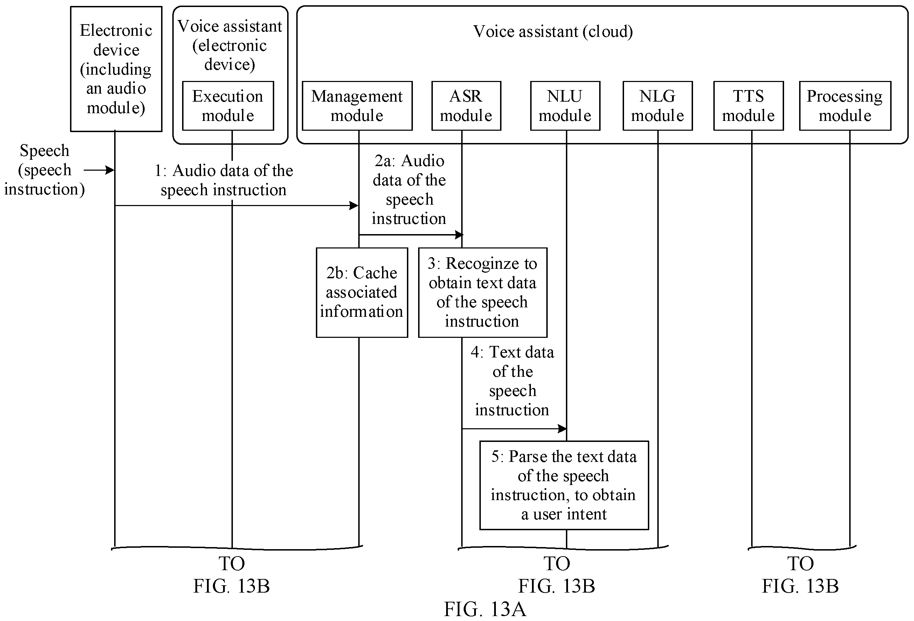

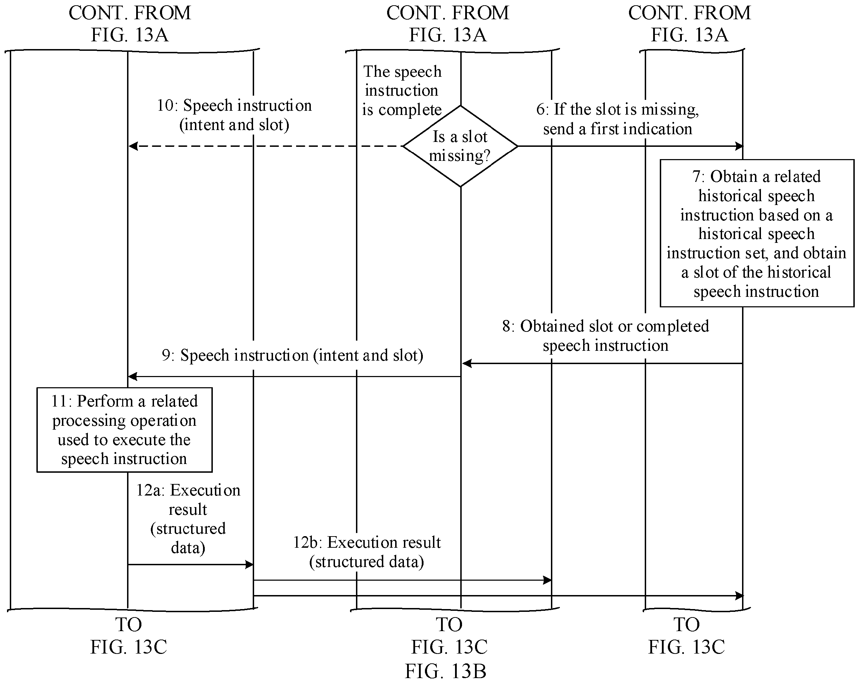

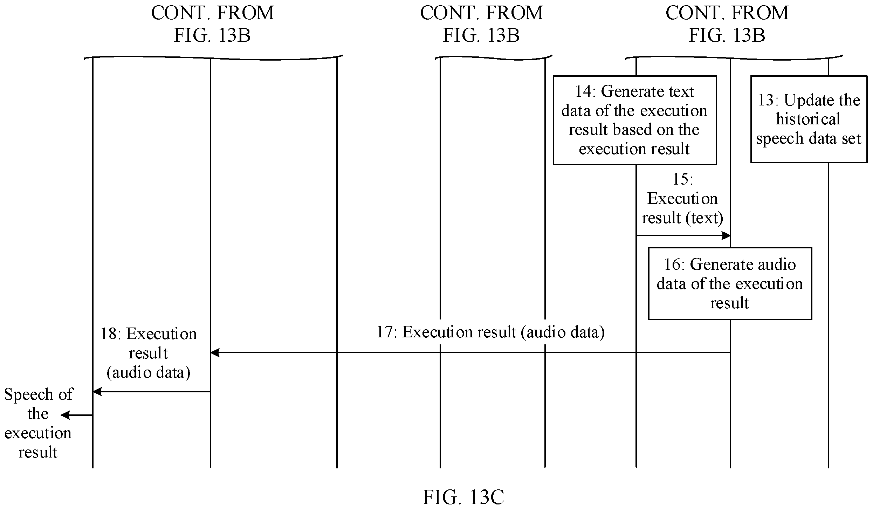

FIG. 13A to FIG. 13C are a schematic flowchart of another speech instruction processing method according to an embodiment of this application. In this procedure, for a current speech instruction that misses a slot (for example, misses an execution device), a voice assistant on a cloud may obtain, based on a historical speech instruction set, a historical speech instruction related to the speech instruction, and after obtaining the related historical speech instruction, the voice assistant adds a slot of the historical speech instruction to the current speech instruction, so that the current speech instruction is complete.

In the procedure shown in FIG. 13A to FIG. 13C, some functions of the voice assistant are deployed on the electronic device, and some functions are deployed on the cloud, that is, the procedure may be applied to the architecture shown in FIG. 8c.

In the procedure shown in FIG. 12A to FIG. 12C or FIG. 13A to FIG. 13C, in a scenario in which the user uses a simplified speech instruction (for example, missing a slot), a missing part of the current speech instruction may be determined based on the historical speech instruction set, to complete the current speech instruction into a speech instruction with complete semantic meaning. This can ensure that the speech instruction can be executed, and improve user experience. Because a historical speech record set is deployed on the cloud, and a plurality of electronic devices may share the historical speech record set, cross-device speech continuation can be implemented. In addition, speech continuation is performed on the cloud (that is, querying the related historical speech record, to obtain the missing part of the current speech instruction), so that processing overheads on a terminal side can be reduced.

It should be noted that FIG. 10A to FIG. 10C, FIG. 12A to FIG. 12C, and FIG. 13A to FIG. 13C describe a speech instruction processing process based on only some possible deployment manners of the voice assistant. When the functions in the voice assistant are in other deployment manners, the speech instruction processing process is correspondingly adjusted, and details are not listed herein.

According to the foregoing embodiments, the following shows examples of speech continuation in several scenarios.

### Example 1

A scenario of Example 1 is as follows: A user first says "Play a movie on the television in the living room" to a mobile phone, and then says "Just an action movie" to a speaker. After receiving the speech instruction "Play a movie on the television in the living room", the mobile phone sends a control instruction to the television in the living room, so that the television in the living room displays a movie home screen in response to the control instruction; and after receiving the speech instruction "Just an action movie", the speaker sends a control instruction to the television in the living room, so that the television in the living room selects, in response to the control instruction, an action movie on the movie home screen for playing.

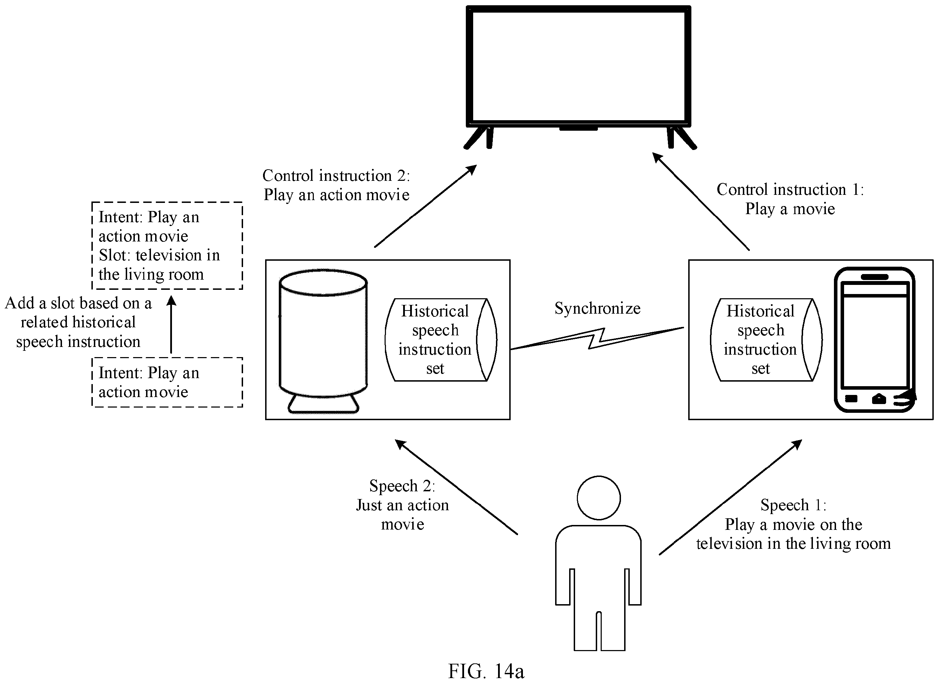

FIG. 14a shows a system architecture in the scenario. The mobile phone and the speaker share a historical speech instruction set. In other words, the mobile phone and the speaker separately store the historical speech instruction set locally, and the mobile phone and the speaker may synchronize the historical speech instruction sets through interaction. In this way, after the speaker receives the speech instruction "Just an action movie", because the locally stored historical speech instruction set includes the speech instruction "Play a movie on the television in the living room" received and processed by the mobile phone before, a voice assistant on the speaker may determine, through correlation degree matching, that the speech instruction "Play a movie on the television in the living room" is related to the current speech instruction "Just an action movie", and then determine that an execution device of the current speech instruction "Just an action movie" is the television in the living room.

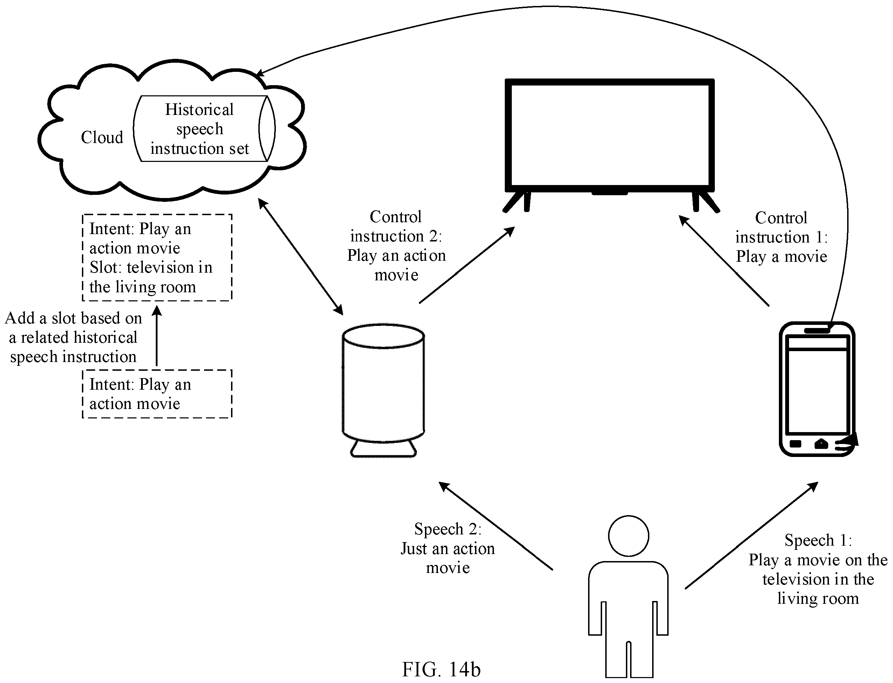

FIG. 14b shows another system architecture in the scenario. The mobile phone and the speaker do not locally store a historical speech instruction set, the historical speech instruction set is stored on a cloud, and both the mobile phone and the speaker can access the historical speech instruction set. In this way, after the speaker receives the speech instruction "Just an action movie", because the historical speech instruction set stored on the cloud includes the speech instruction "Play a movie on the television in the living room" received and processed by the mobile phone before, a voice assistant on the speaker may determine, through correlation degree matching, that the speech instruction "Play a movie on the television in the living room" is related to the current speech instruction "Just an action movie", and then determine that an execution device of the current speech instruction "Just an action movie" is the television in the living room.

In Example 1, for a specific implementation of processing the speech instruction by the mobile phone and the speaker, refer to the foregoing embodiments.

### Example 2

A scenario of Example 2 is as follows: A user first says "Play a movie of Andy Lau" to a television, and then says "Just an action movie" to a tablet computer. After the television receives the speech instruction "Play a movie of Andy Lau", because the speech instruction does not include execution device information, a voice assistant on the television may select a default execution device (for example, the television is the default execution device) to respond to the speech instruction, and display a list of movies played by Andy Lau; and after receiving the speech instruction "Just an action movie", the tablet computer sends a control instruction to the television, so that the television selects, in response to the control instruction, an action movie from the list of movies for playing.

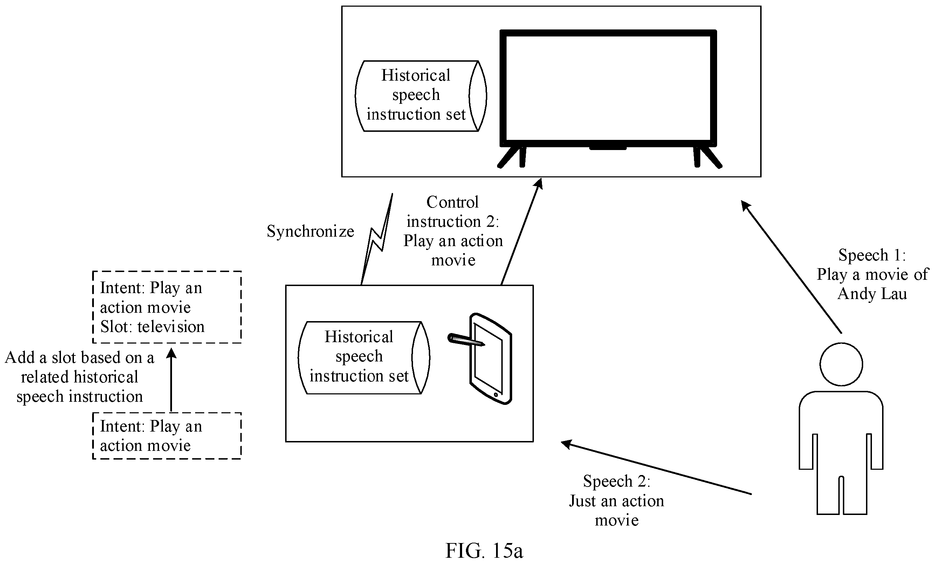

FIG. 15a shows a system architecture in the scenario. The television and the tablet computer share a historical speech instruction set. In this way, after the tablet computer receives the speech instruction "Just an action movie", because the locally stored historical speech instruction set includes the speech instruction "Play a movie of Andy Lau" received and processed by the television before, the voice assistant on the tablet computer may determine, through correlation degree matching, that the speech instruction "Play a movie of Andy Lau" is related to the current speech instruction "Just an action movie", and then determine that an execution device of the current speech instruction "Just an action movie" is the same as an execution device of the speech instruction "Play a movie of Andy Lau".

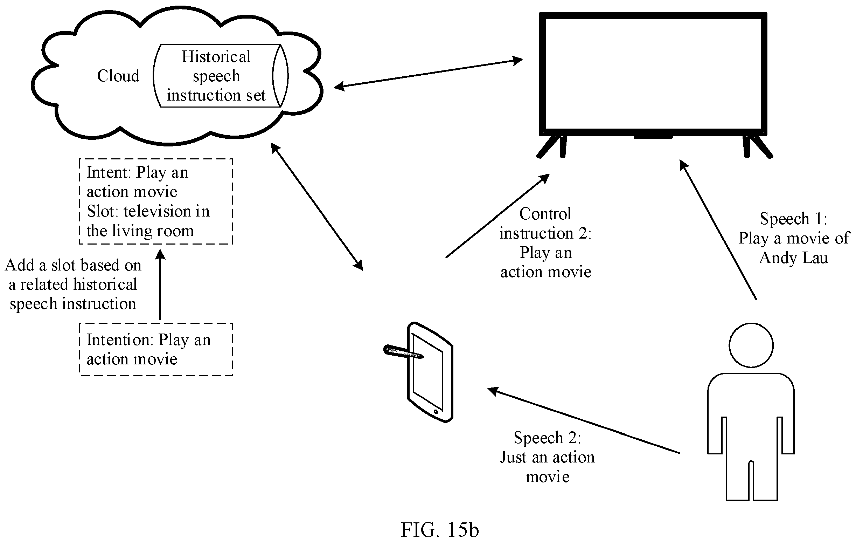

FIG. 15b shows another system architecture in the scenario. The television and the tablet computer do not locally store a historical speech instruction set, the historical speech instruction set is stored on a cloud, and both the television and the tablet computer can access the historical speech instruction set. In this way, after the tablet computer receives the speech instruction "Just an action movie", because the historical speech instruction set stored on the cloud includes the speech instruction "Play a movie of Andy Lau" received and processed by the television before, the voice assistant on the tablet computer may determine, through correlation degree matching, that the speech instruction "Play a movie of Andy Lau" is related to the current speech instruction "Just an action movie", and then determine that an execution device of the current speech instruction "Just an action movie" is the same as an execution device of the speech instruction "Play a movie of Andy Lau".

### Example 3

A scenario of Example 3 is as follows: A user first says "Play a movie of Andy Lau" to a speaker, and then says "Just an action movie" to a tablet computer. After the speaker receives the speech instruction "Play a movie of Andy Lau", because the speech instruction does not include execution device information, a voice assistant may select a default execution device (for example, a television in a living room is the default execution device of a video playing operation) to respond to the speech instruction, and the television in the living room displays a list of movies played by Andy Lau; and after receiving the speech instruction "Just an action movie", the tablet computer sends a control instruction to the television in the living room, so that the television in the living room selects, in response to the control instruction, an action movie from the list of movies for playing.

In a system architecture in the scenario, the speaker and the tablet computer share a historical speech instruction set. In this way, after the tablet computer receives the speech instruction "Just an action movie", because the locally stored historical speech instruction set includes related data of the previous speech instruction "Play a movie of Andy Lau", the voice assistant on the tablet computer may determine, through correlation degree matching, that the speech instruction "Play a movie of Andy Lau" is related to the current speech instruction "Just an action movie", and then determine that an execution device of the current speech instruction "Just an action movie" is the same as an execution device of the speech instruction "Play a movie of Andy Lau".

In another system architecture in the scenario, the speaker and the tablet computer do not locally store a historical speech instruction set, the historical speech instruction set is stored on a cloud, and both the speaker and the tablet computer can access the historical speech instruction set. In this way, after the tablet computer receives the speech instruction "Just an action movie", because the historical speech instruction set stored on the cloud includes the previous speech instruction "Play a movie of Andy Lau", the voice assistant on the tablet computer may determine, through correlation degree matching, that the speech instruction "Play a movie of Andy Lau" is related to the current speech instruction "Just an action movie", and then determine that an execution device of the current speech instruction "Just an action movie" is the same as an execution device of the speech instruction "Play a movie of Andy Lau".

An embodiment of this application further provides a computer-readable storage medium. The computer-readable storage medium is configured to store a computer program. When the computer program is executed by a computer, the computer may implement the methods provided in the method embodiments.

An embodiment of this application further provides a computer program product. The computer program product is configured to store a computer program. When the computer program is executed by a computer, the computer may implement the methods provided in the method embodiments.

An embodiment of this application further provides a chip, including a processor. The processor is coupled to a memory, and is configured to invoke a program in the memory, so that the chip implements the methods provided in the method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A speech instruction processing method, wherein the method comprises:
obtaining a first speech instruction;
determining an intent of the first speech instruction, and determining, based on the intent of the first speech instruction, that the first speech instruction misses a slot;
obtaining a second speech instruction in a historical speech instruction set, wherein the second speech instruction is related to the first speech instruction; and
determining the slot of the first speech instruction based on a slot of the second speech instruction.

2. The method according to claim 1, wherein the determining the slot of the first speech instruction based on a slot of the second speech instruction comprises:
the missing slot of the first speech instruction is provided by the corresponding slot of the second speech instruction.

3. The method according to claim 1 or 2, wherein after the determining the slot of the first speech instruction based on a slot of the second speech instruction, the method further comprises:
adding the slot of the second speech instruction to the first speech instruction; and
storing, in the historical speech instruction set, the first speech instruction to which the slot is added.

4. The method according to claim 3, wherein the adding the slot of the second speech instruction to the first speech instruction comprises:
obtaining the slot in structured data of the second speech instruction, wherein the slot in the structured data of the second speech instruction is slot information expressed in a natural language or is a protocol parameter, and the protocol parameter is a protocol parameter obtained by mapping the slot information expressed in the natural language; and
adding the slot in the structured data of the second speech instruction to structured data of the first speech instruction.

5. The method according to claim 3 or 4, wherein the method further comprises:
if the first speech instruction comprises a demonstrative pronoun indicating the slot of the first speech instruction, deleting the demonstrative pronoun from the first speech instruction.

6. The method according to any one of claims 1 to 5, wherein the obtaining a second speech instruction in a historical speech instruction set comprises:
obtaining, based on a correlation degree between the first speech instruction and a historical speech instruction in the historical speech instruction set, the second speech instruction that is in the historical speech instruction set and that is related to the first speech instruction.

7. The method according to claim 6, wherein the obtaining, based on a correlation degree between the first speech instruction and a historical speech instruction in the historical speech instruction set, the second speech instruction that is in the historical speech instruction set and that is related to the first speech instruction comprises:
determining a correlation degree between the first speech instruction and each historical speech instruction in the historical speech instruction set based on the first speech instruction, the intent of the first speech instruction, and/or associated information corresponding to the first speech instruction, and each historical speech instruction in the historical speech instruction set, an intent of each historical speech instruction, and/or corresponding associated information, wherein the associated information corresponding to the first speech instruction is collected when the first speech instruction is received, and the associated information corresponding to the historical speech instruction is collected when the historical speech instruction is received; and
selecting, from the historical speech instruction set based on the correlation degree between the first speech instruction and each historical speech instruction in the historical speech instruction set, the second speech instruction related to the first speech instruction.

8. The method according to any one of claims 1 to 5, wherein the obtaining a second speech instruction in a historical speech instruction set comprises:
sending, by a first electronic device, a first request message to a cloud or a third electronic device, wherein the first request message is used to request to obtain a speech instruction that is in the historical speech instruction set and that is associated with the first speech instruction, and the first electronic device is a receiving device of the first speech instruction; and
receiving, by the first electronic device, a first response message sent by the cloud or the third electronic device, wherein the first response message carries the second speech instruction, and the second speech instruction is obtained from the historical speech instruction set based on a correlation degree between the first speech instruction and a historical speech instruction in the historical speech instruction set.

9. The method according to claim 8, wherein the first request message carries the first speech instruction, the intent of the first speech instruction, and/or associated information corresponding to the first speech instruction.

10. The method according to claim 7 or 9, wherein the associated information corresponding to the first speech instruction comprises at least one of the following:
device information, wherein the device information is information about the receiving device of the first speech instruction;
user account information, wherein the user account information is user account information for logging in to a voice assistant;
location information, wherein the location information is location information of the receiving device of the first speech instruction;
time information, wherein the time information comprises time at which the first speech instruction is received, and/or a time interval between the first speech instruction and a previously received speech instruction; and
user identity information, wherein the user identity information is associated with feature information of audio data of the first speech instruction.

11. The method according to any one of claims 1 to 5, wherein the obtaining a second speech instruction in a historical speech instruction set, and the determining the slot of the first speech instruction based on a slot of the second speech instruction comprise:
obtaining, by a cloud based on a correlation degree between the first speech instruction and a historical speech instruction in the historical speech instruction set, the second speech instruction that is in the historical speech instruction set and that is related to the first speech instruction; and
determining the slot of the first speech instruction based on the slot of the second speech instruction, wherein the missing slot of the first speech instruction is provided by the corresponding slot of the second speech instruction.

12. The method according to any one of claims 1 to 5, wherein
the obtaining a first speech instruction comprises:
converting, by a cloud, audio data of the first speech instruction from a first electronic device, to obtain corresponding text data;
the determining an intent of the first speech instruction, and determining, based on the intent of the first speech instruction, that the first speech instruction misses a slot comprises:
parsing, by the cloud, the text data, to obtain the intent of the first speech instruction, and determining, based on the intent of the first speech instruction, that the first speech instruction misses the slot; and
the obtaining a second speech instruction in a historical speech instruction set, and the determining the slot of the first speech instruction based on a slot of the second speech instruction comprise:
obtaining, by the cloud, the second speech instruction in the historical speech instruction set, and determining the slot of the first speech instruction based on the slot of the second speech instruction.

13. The method according to any one of claims 1 to 12, wherein the historical speech instruction set comprises structured data of the historical speech instruction, and the structured data of the historical speech instruction comprises an intent and a slot.

14. The method according to any one of claims 1 to 13, wherein the slot is a device, an application, or a service that executes an intent of a speech instruction.

15. A speech instruction processing system, comprising:
an automatic speech recognition module, configured to convert audio data of a first speech instruction into text data;
a natural language understanding module, configured to parse the text data of the first speech instruction, to obtain an intent of the first speech instruction; and
a processing module, configured to: if it is determined, based on the intent of the first speech instruction, that the first speech instruction misses a slot, obtain a second speech instruction in a historical speech instruction set, and determine the slot of the first speech instruction based on a slot of the second speech instruction, wherein the second speech instruction is related to the first speech instruction.

16. The system according to claim 15, wherein the missing slot of the first speech instruction is provided by the corresponding slot of the second speech instruction.

17. The system according to claim 15 or 16, wherein the processing module is further configured to:
after the slot of the first speech instruction is determined based on the slot of the second speech instruction, add the slot of the second speech instruction to the first speech instruction, and store, in the historical speech instruction set, the first speech instruction to which the slot is added.

18. The system according to claim 17, wherein the processing module is specifically configured to:
obtain the slot in structured data of the second speech instruction, wherein the slot in the structured data of the second speech instruction is slot information expressed in a natural language or is a protocol parameter, and the protocol parameter is a protocol parameter obtained by mapping the slot information expressed in the natural language; and
add the slot in the structured data of the second speech instruction to structured data of the first speech instruction.

19. The system according to claim 17 or 18, wherein the processing module is further configured to:
if the first speech instruction comprises a demonstrative pronoun indicating the slot of the first speech instruction, delete the demonstrative pronoun from the first speech instruction.

20. The system according to any one of claims 15 to 19, wherein the processing module is specifically configured to:
obtain, based on a correlation degree between the first speech instruction and a historical speech instruction in the historical speech instruction set, the second speech instruction that is in the historical speech instruction set and that is related to the first speech instruction.

21. The system according to claim 20, wherein the processing module is specifically configured to:
determine a correlation degree between the first speech instruction and each historical speech instruction in the historical speech instruction set based on the first speech instruction, the intent of the first speech instruction, and/or associated information corresponding to the first speech instruction, and each historical speech instruction in the historical speech instruction set, an intent of each historical speech instruction, and/or corresponding associated information, wherein the associated information corresponding to the first speech instruction is collected when the first speech instruction is received, and the associated information corresponding to the historical speech instruction is collected when the historical speech instruction is received; and
select, from the historical speech instruction set based on the correlation degree between the first speech instruction and each historical speech instruction in the historical speech instruction set, the second speech instruction related to the first speech instruction.

22. The system according to claim 21, wherein the associated information corresponding to the first speech instruction comprises at least one of the following:
device information, wherein the device information is information about a receiving device of the first speech instruction;
user account information, wherein the user account information is user account information for logging in to a voice assistant;
location information, wherein the location information is location information of the receiving device of the first speech instruction;
time information, wherein the time information comprises time at which the first speech instruction is received, and/or a time interval between the time at which the first speech instruction is received and time at which a previous speech instruction is received; and
user identity information, wherein the user identity information is associated with feature information of the audio data of the first speech instruction.

23. The system according to any one of claims 15 to 22, wherein the historical speech instruction set comprises structured data of the historical speech instruction, and the structured data of the historical speech instruction comprises an intent and a slot.

24. The system according to any one of claims 15 to 23, wherein the slot is a device, an application, or a service that executes an intent of a speech instruction.

25. The system according to any one of claims 15 to 24, wherein
the automatic speech recognition module, the natural language understanding module, and the processing module are located on a first electronic device; or
the automatic speech recognition module and the natural language understanding module are located on a first electronic device, and the processing module is located on a cloud or a third electronic device; or
the automatic speech recognition module is located on a first electronic device, and the natural language understanding module and the processing module are located on a cloud; or
the automatic speech recognition module, the natural language understanding module, and the processing module are located on a cloud.

26. The system according to any one of claims 15 to 25, further comprising:
an execution module, configured to: based on the intent and the slot of the first speech instruction, execute the first speech instruction or indicate an execution device of the first speech instruction to execute the first speech instruction, wherein the execution device is provided by the slot of the first speech instruction.

27. The system according to claim 26, further comprising a natural language generation module and a text-to-speech module, wherein
the execution module is further configured to obtain an execution result of the first speech instruction;
the natural language generation module is configured to convert the execution result of the first speech instruction into text data, wherein the text data is a natural language in a text format; and
the text-to-speech module is configured to convert the text data into audio data.

28. An electronic device, comprising one or more processors, wherein one or more memories store one or more computer programs, the one or more computer programs comprise instructions, and when the instructions are executed by the one or more processors, the electronic device is enabled to perform the method according to any one of claims 1 to 14.

29. A computer-readable storage medium, comprising a computer program, wherein when the computer program is run on an electronic device, the electronic device is enabled to perform the method according to any one of claims 1 to 14.
